# EUROPEAN PATENT SPECIFICATION

(11) **EP 2 190 200 B1**
(45) Date of publication and mention of the grant of the patent: **14.02.2018**
(21) Application number: 08832740.8
(22) Date of filing: 17.09.2008
(51) Int. Cl.: H04N 7/173, H04N 5/445

(54) **DISPLAY DEVICE, DISPLAY METHOD AND DISPLAY PROGRAM**
ANZEIGEVORRICHTUNG, ANZEIGEVERFAHREN UND ANZEIGEPROGRAMM
DISPOSITIF, PROCÉDÉ ET PROGRAMME D'AFFICHAGE

(30) Priority: 18.09.2007 JP 2007240569
(43) Date of publication of application: 26.05.2010
(73) Proprietor: Panasonic Corporation, Kadoma-shi Osaka 571-8501 (JP)
(72) Inventor: KATAOKA, Mitsuteru, Osaka 540-6207 (JP); MITSUMATA, Tatsuaki, Osaka 540-6207 (JP)
(74) Representative: TBK
(86) International application number: PCT/JP2008/002554
(87) International publication number: WO 2009/037830

(56) References cited:
- EP-A1- 1 580 989
- EP-A1- 1 613 074
- EP-A2- 1 128 669
- JP-A- 2000 354 210
- JP-A- 2002 044 554
- JP-A- 2005 244 869
- JP-A- 2006 115 228
- JP-A- 2007 096 840
- US-A1- 2003 208 763

## Description

### [Technical Field]

The present invention relates to a display apparatus, a display method, and a display program for displaying program information.

### [Background Art]

A broadcasting system includes a broadcasting station apparatus as a transmitting system for transmitting a broadcast signal for programs from a broadcasting station, and a receiving apparatus as a receiving system for receiving the broadcast signal transmitted from the broadcasting station apparatus (e.g. a television receiver).

In a digital broadcasting system, multiple pieces of information are multiplexed on the broadcast signal sent from the transmitting system to the receiving system, so as to provide an increasing variety of functions in the receiving system according to viewers' demands.

For example, a service that provides information about programs scheduled to be broadcasted (program scheduling information) to viewers is practiced. According to this service, the transmitting system multiplexes program scheduling information as Electric Program Guide (EPG) data on the broadcast signal, and the signal is sent to the receiving system. The receiving system extracts the EPG data from the sent broadcast signal, and presents the information about broadcast-scheduled programs to the viewers.

Now, in the EPG data, "program title", "broadcast start time", "broadcast end time", "channel", and "program identifier" are associated with each broadcast-scheduled program, for example.

"Program title" is the title of the associated broadcast-scheduled program, and "broadcast start time" is the time at which that broadcast-scheduled program is scheduled to start. "Broadcast end time" is the time at which that broadcast-scheduled program is scheduled to end, and "channel" is the channel on which the broadcast-scheduled program is going to be broadcasted. "Program identifiers" are for identifying individual programs scheduled to be broadcasted and programs being broadcasted.

The EPG data may sometimes further include information for allowing viewers to search for desired programs, such as program genre, program description and cast, or information about links to information related to the programs, for example.

Information about broadcast-scheduled programs can be displayed, e.g. on the television screen, by multiplexing EPG data on the broadcast signal. Then, on the basis of the displayed information about broadcast-scheduled programs, the viewer can specify a desired broadcast-scheduled program and check information about that program, for example.

As the service of presenting broadcast-scheduled program information to viewers is put in practice, Association of Radio Industries and Businesses provides a program arrangement information standard (STD-B10) for use in digital broadcasting systems. Accordingly, the EPG data is transmitted from transmitting systems on the basis of the standard in current digital broadcasting systems.

In this standard, the contents of EPG data sent from the transmitting system to receiving system are limited to programs that are scheduled to be broadcasted during a given period from the time at which the EPG data was transmitted (e.g. in eight days from the time of transmission).

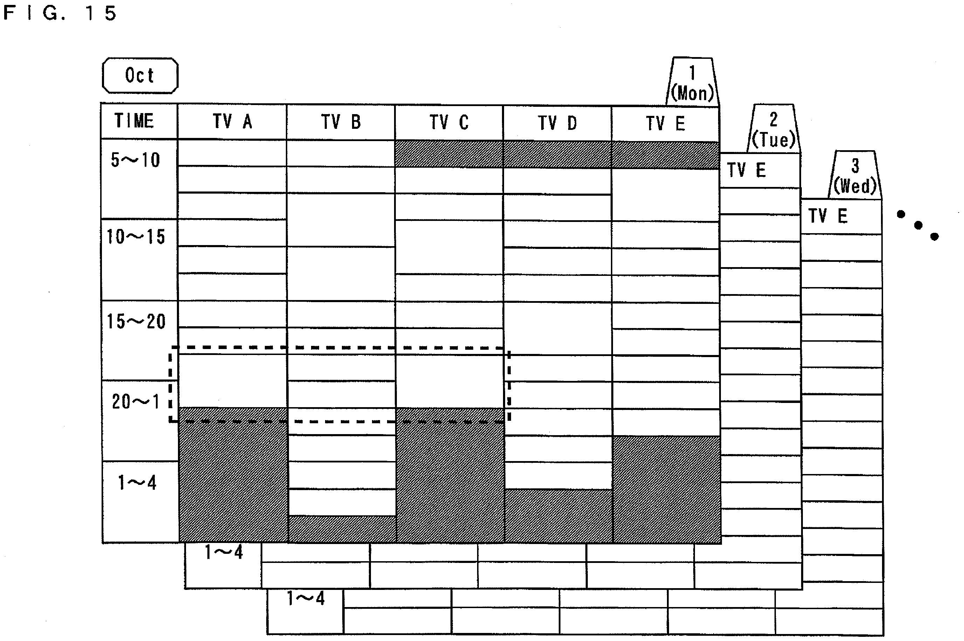

FIG. 15 is a diagram showing an example of a program table for a given number of days from the time of transmission. In the program table of FIG. 15, broadcast time is shown in the vertical axis direction, and a plurality of TV stations (TV stations A to E) are shown in the horizontal axis direction. The broadcast-scheduled programs of the individual TV stations are thus displayed in the column direction in a time sequential manner. This state of display is called a radio/TV channel guide.

In FIG. 15, broadcast-scheduled programs of the individual TV stations are associated with blank program frames. Also, broadcast halt periods of the individual TV stations are associated with hatched halt frames.

Thus, the contents of EPG data include information about programs scheduled to be broadcasted in a certain period from the time of transmission. Accordingly, a program table as shown in FIG. 15 can be generated with EPG data.

However, in the receiving apparatus, all information for the certain period from the time of transmission cannot be displayed on the television screen at one time. Accordingly, as shown by thick broken line in FIG. 15, for example, part of the program table obtained with the EPG data is displayed on the television screen.

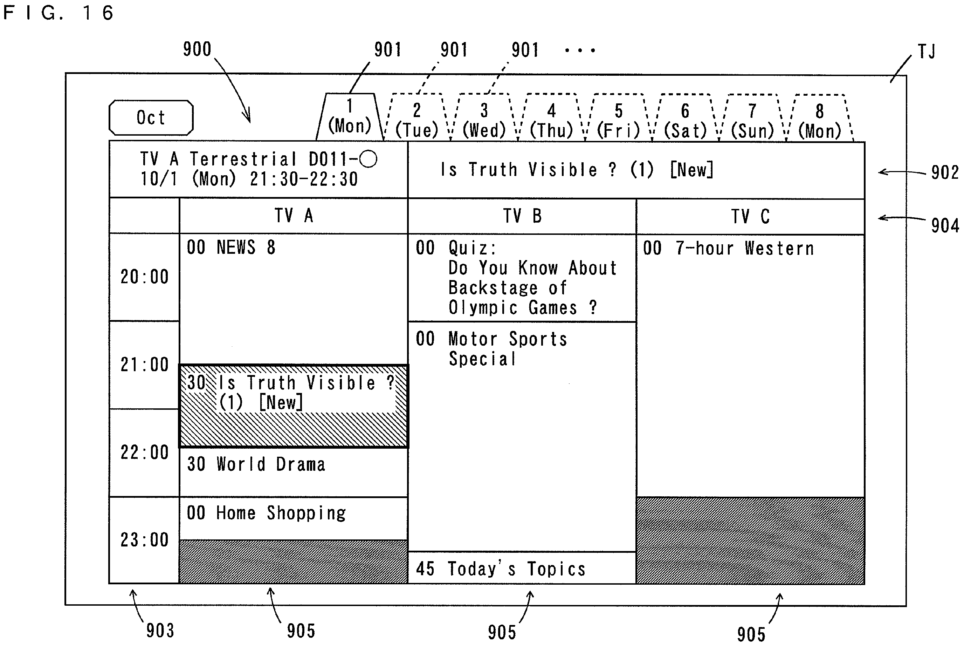

FIG. 16 is a diagram showing an example of a program table displayed on the television screen in a conventional receiving apparatus. As shown in FIG. 16, a program table 900 is displayed on the television screen TJ as the user operates a remote controller, for example.

A plurality of date tabs 901 are displayed in an upper part of the television screen TJ. A focused program display section 902 is displayed as part of the program table 900 under the date tabs 901. The focused program display section 902 displays detailed information about a focused program that will be described later.

A time display section 903, a TV station display section 904, and program display sections 905 are displayed under the focused program display section 902.

In the time display section 903, times in which programs are scheduled to be broadcasted are displayed in the vertical axis direction. In the TV station display section 904, the names of multiple TV stations are displayed in the horizontal axis direction. In the program display sections 905, program frames and halt frames are displayed along the time displayed in the time display section 903.

A user can select one of the plurality of program frames and halt frames on the program table 900 by operating a remote controller. Then, the selected program frame or halt frame is highlighted.

In the program table 900 of FIG. 16, the program frame indicating a program "Is Truth Visible?" of TV station A is highlighted. The program table 900 of FIG. 16 indicates highlighting with rough oblique hatching.

In the description below, a state in which a user can thus select a particular program frame or halt frame is referred to as "focus". Also, the broadcast-scheduled program associated with the program frame selected with the focus is referred to as "a focused program".

The user can move the focus from frame to frame by operating a remote controller. Also, the user can scroll the program table 900 along the time axis by sequentially moving the focus along the time axis direction (vertical axis direction).

As mentioned above, for the function of displaying a program table on the television screen of a receiving apparatus, various functions are proposed by considering usability of users and so on (for example, see Patent Documents 1 and 2).

Further, various types of program tables are proposed, such as a matrix-type single-channel EPG (for example, see Patent Documents 3 and 5) and a matrix-type multiple-channel EPG (for example, see Patent Document 4).
[Patent Document 1] JP 6-504165 A
[Patent Document 2] JP 2006-313948 A
[Patent Document 3] US 2003/0208763 A1
[Patent Document 4] EP 1 128 669 A2
[Patent Document 5] JP 2000 354210 A

As mentioned above, examples of manners to display a program table on the television screen TJ include a program table that displays information about programs scheduled to be broadcasted from one TV station alone. A program table displayed in such a manner is hereinafter referred to as "a one-station program table".

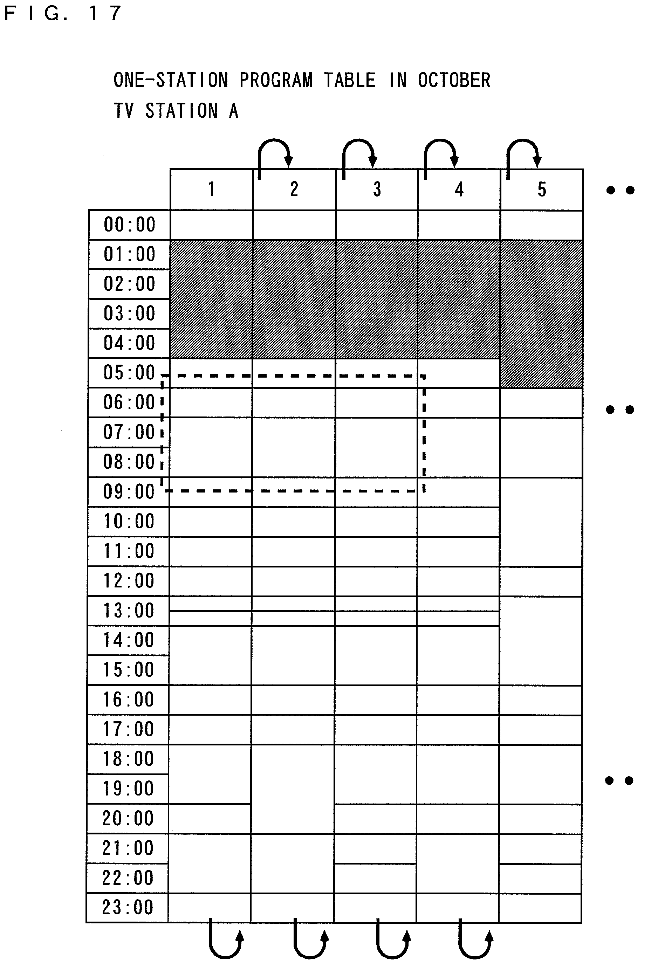

FIG. 17 is a diagram showing an example of a one-station program table. In the one-station program table shown in FIG. 17, the broadcast schedule time is shown in the vertical axis direction, and broadcast scheduled dates are shown in the horizontal axis direction. Programs scheduled to be broadcasted from TV station A on each day are thus shown in a time-sequential manner in the column direction. That is to say, the one-station program table of FIG. 17 displays a radio/TV channel guide of TV station A for each single day.

In FIG. 17, broadcast-scheduled programs of TV station A are associated with blank program frames. Also, broadcast halt times of TV station A are associated with hatched halt frames.

As shown in FIG. 17, in the one-station program table, a radio/TV channel guide for each single day, for example, is turned up at 0:00 or a broadcast halt time. Such one-station program tables are used in Web sites of TV stations, for example.

A one-station program table can be displayed on the television screen TJ also by using EPG data. When a one-station program table is displayed on the television screen TJ, the television screen TJ does not display program tables for other TV stations. The limited display area of the television screen TJ can thus be used effectively.

When a one-station program table is displayed on the television screen TJ, the entirety of a radio/TV channel guide for one day cannot be displayed at one time, since the display area of the television screen TJ is limited. Accordingly, as shown by thick broken line in FIG. 17, for example, part of the one-station program table is displayed on the television screen TJ.

Accordingly, when viewing the one-station program table displayed on the television screen TJ, the user has to change the displayed area of the one-station program table from one certain time zone to another, such as morning, afternoon, night and late night. Or, it is necessary to scroll the displayed area of the one-station program table by varying the time zone to be displayed.

However, when a one-station program table displayed on the television screen TJ is switched for each of certain time zones, the one-station program table is re-drawn on the television screen TJ each time the time zone is switched.

In such a case, the user has to re-recognize the time zone of the display of the one-station program table every time the program table is re-drawn. Also, the contents displayed on the television screen TJ considerably change every time the program table is re-drawn. The user therefore has to re-recognize the contents of the one-station program table, too. Thus, the user has to re-recognize a lot of information and will feel stressed.

Also, when a one-station program table is switched from a certain time zone to another, the entirety of the one-station program table is re-drawn on the television screen TJ. The re-drawing thus takes a long time. This causes the user to feel stressed every time the display area of the one-station program table is switched.

On the other hand, when scrolling the display area of the one-station program table, the user moves the cursor with, e.g. a remote controller, and the display area of the one-station program table is scrolled in response to the movement of the cursor. In this case, in re-drawing, the contents change less considerably than when the one-station program table is switched for each of certain time zones, so that the work of re-recognizing the time zone and contents of the one-station program table is alleviated in scrolling.

However, as mentioned above, in a one-station program table, a radio/TV channel guide for one day is turned up at 0:00 or a broadcast halt time. Accordingly, when a user scrolls the display area of the one-station program table across 0:00 or broadcast halt time, the same problems occur just like when the one-station program table is switched to a certain time zone.

A specific example will be described. The description below assumes that a radio/TV channel guide for one day in the one-station program table is turned up at 0:00 (24:00). The time at which the program table is turned up is hereinafter referred to as a turning time.

For example, when the focus is positioned in a program frame immediately before 0:00 on October 2, the television screen TJ displays the one-station program table for October 1. When the user moves the focus to further future in this condition, the television screen TJ then displays the one-station program table from 0:00 on October 2, because the one-station program table of October 1 includes no information after 24:00.

Thus, even when the display area of the one-station program table is scrolled, the display area of the one-station program table is entirely changed when it is scrolled across the turning time of the one-station program table. Then, the user feels stressed as when switching the one-station program table for each of certain time zones.

### [Summary of the Invention]

An object of the present invention is to provide a display apparatus, a display method, and a display program that allow users to check information in a program table displayed on a screen without feeling stressed.

According to the present invention, there are disclosed a display apparatus, a display method, and a display program, as defined in the claims.

In the following, aspects of the present disclosure are summarized.
(1) According to one aspect of the present disclosure, a display apparatus includes a receiver that receives a broadcast signal and extracts program scheduling information from the received broadcast signal, a program table generator that generates a program table on the basis of the program scheduling information extracted by the receiver, a display that displays on a screen at least a partial area of the program table generated by the program table generator, an operation device that is operated by a user to move the area of the program table displayed on the screen, and a controller that controls the program table generator such that at least the partial area of the program table generated by the program table generator is displayed on the display, wherein the program table includes a time axis indicating broadcast schedule time of programs, a date axis provided to cross the time axis to indicate broadcast schedule days of the programs, and a plurality of program display sections provided to extend along the time axis for individual dates along the date axis, and the program table has at least one program frame displayed in any of the plurality of program display sections and showing information about a program, and wherein the controller controls the program table generator such that the areas of the plurality of program display sections displayed on the screen are moved along the time axis on the basis of an operation of the operation device, and such that, when the areas of the plurality of program display sections displayed on the screen include ends of the program display sections of individual dates and beginnings of the program display sections of next dates, the ends of the program display sections of the individual dates and the beginnings of the program display sections of the next dates are continuously displayed in the same program display sections.
   In this display apparatus, the receiver receives a broadcast signal and extracts program scheduling information from the received broadcast signal. The program table generator generates a program table on the basis of the extracted program scheduling information. Then, at least a partial area of the generated program table is displayed in the display.
   The program table includes a time axis indicating broadcast schedule time of programs, a date axis provided to cross the time axis to indicate broadcast schedule days of the programs, and a plurality of program display sections provided to extend along the time axis for individual dates along the date axis.
   At least one program frame showing information about a program is displayed in any of the plurality of program display sections. The user can easily and certainly recognize information about the program shown by the program frame.
   The areas of the plurality of program display sections displayed on the screen are moved along the time axis on the basis of an operation of the operation device by the user. Thus, the user can easily and certainly recognize information about programs in a desired time zone on each date by operating the operation device.
   When the user operates the operation device, when the areas of the plurality of program display sections displayed on the screen include the ends of the program display sections of the individual dates and the beginnings of the program display sections of the next dates, the ends of the program display sections of the individual dates and the beginnings of the program display sections of the next dates are continuously displayed in the same program display sections.
   Thus, even when the areas of the plurality of program display sections displayed on the screen are moved across successive dates on the basis of an operation of the operation device by the user, the ends of the program display sections of the individual dates and the beginnings of the program display sections of the next dates are not switched on the screen.
   Thus, the contents of the plurality of program display sections displayed on the screen are not wholly changed, so that the program table generator can generate the program table in a shorter time and the display can display the program table in a shorter time. Also, the ends of the program display sections of the individual dates and the beginnings of the program display sections of the next dates can be visually recognized at the same time, and the continuity of the ends of the program display sections of the individual dates and the beginnings of the program display sections of the next dates can be visually recognized. Accordingly, the user can check the information in the program table displayed on the screen without feeling stressed.
(2) The operation device may be further operated by the user to select one program frame, and the controller may control the program table generator such that a program frame selected on the basis of an operation of the operation device is displayed in a first display manner as a first program frame, and such that, when there is another program frame having a predetermined relation with the first program frame, that another program frame having the predetermined relation with the first program frame is displayed in a second display manner as a second program frame, and wherein the first and second display manners may be set to be different from a display manner of an area other than the first and second program frames.
   In this case, one program frame is selected as the user operates the operation device. The selected one program frame is displayed in a first display manner. At this time, when there is another program frame having a predetermined relation with the first program frame, that another program frame is displayed in a second display manner as a second program frame. Also, the first and second display manners are different from the display manner of the area other than the first and second program frames.
   Thus, the first display manner allows the user to visually recognize the program of the first program frame selected by the user, and the second display manner allows the user to visually recognize the program of the second program frame having a predetermined relation with the program of the first program frame.
(3) The predetermined relation may be that the program of the second program frame is a series program having a common title with the program of the first program frame.
   In this case, the user can visually recognize that the program of the first program frame is a series program, and visually recognize a series program having a title common to the program title of the first program frame as a program of the second program frame.
(4) The predetermined relation may be that the program of the second program frame is included in a common genre with the program of the first program frame.
   In this case, the user can visually recognize that there is a program included in a common genre with the program of the first program frame, and visually recognize the program included in a common genre with the program of the first program frame as a program of the second program frame.
(5) The program table may have an empty frame indicating a broadcast-scheduled program undetermined period or a program halt period in an area where no program frame exists in each program display section, and the operation device may be further operated by the user to select one program frame or one empty frame, and, when a last program frame in a program display section of a last date including at least one program frame is being selected and the user operates the operation device to select a following empty frame, the controller may control the program table generator such that a program frame or an empty frame of a program display section of an immediately preceding date that starts at a time after the last program frame is selected.
   In this case, when the user is selecting the last program frame of the program display section of the last date that includes at least one program frame and the user operates the operation device to select a following empty frame, then a program frame or empty frame of the program display section of the immediately preceding date that starts at a time after the last program frame is selected.
   Thus, even when the user is selecting the last program frame of the program display section of the last date that includes at least one program frame, the user can select a program frame or empty frame at a following time in the program display section of the preceding day, by selecting a following empty frame by using the operation device.
   Accordingly, when the last frame of the program display section of the last date is being selected, the user can easily select a program frame or empty frame at a following time in the program display section of the preceding day.
(6) The program table may have an empty frame indicating a broadcast-scheduled program undetermined period or a program halt period in an area where no program frame exists in each program display section, and the operation device may be further operated by the user to select one program frame or one empty frame as a selected frame, and, when a last selected frame of a program display section of a last date including at least one program frame or empty frame is selected, the controller may control the program table generator to move the program table along the date axis on the screen such that an area of a program display section having no program frame and no empty frame is not displayed on the screen.
   In this case, one program frame, or one empty frame indicating a broadcast-scheduled program undetermined period or a program halt period, is selected by an operation of the operation device by the user.
   Then, when the user selects the last selected frame of the program display section of the last date that includes at least one program frame or empty frame by operating the operation device, the program table is moved along the date axis on the screen such that an area of a program display section having no program frame nor empty frame is not displayed on the screen.
   Thus, the screen of the display does not display a program display section having no program frames and no empty frames, preventing wasteful use of the display region.
(7) According to another aspect of the present disclosure, a display method for displaying a program table in a display includes the steps of: receiving a broadcast signal and extracting program scheduling information from the received broadcast signal, generating a program table on the basis of the extracted program scheduling information, displaying on a screen at least a partial area of the generated program table, and moving the area of the program table displayed on the screen through an operation of an operation device by a user, wherein the program table includes a time axis indicating broadcast schedule time of programs, a date axis provided to cross the time axis to indicate broadcast schedule days of the programs, and a plurality of program display sections provided to extend along the time axis for individual dates along the date axis, and the program table has at least one program frame displayed in any of the plurality of program display sections and showing information about a program, and wherein the step of generating the program table includes the step of moving the areas of the plurality of program display sections displayed on the screen along the time axis on the basis of an operation of the operation device, and, when the areas of the plurality of program display sections displayed on the screen include ends of the program display sections of individual dates and beginnings of the program display sections of next dates, displaying the ends of the program display sections of the individual dates and the beginnings of the program display sections of the next dates continuously in the same program display sections.
   In this display method, a broadcast signal is received and program scheduling information is extracted from the received broadcast signal. A program table is generated on the basis of the extracted program scheduling information. Then, at least a partial area of the generated program table is displayed in the display.
   The program table includes a time axis indicating broadcast schedule time of programs, a date axis provided to cross the time axis to indicate broadcast schedule days of the programs, and a plurality of program display sections provided to extend along the time axis for individual dates along the date axis.
   At least one program frame showing information about a program is displayed in any of the plurality of program display sections. The user can easily and certainly recognize information about the program shown by the program frame.
   The areas of the plurality of program display sections displayed on the screen are moved along the time axis on the basis of an operation of the operation device by the user. Thus, the user can easily and certainly recognize information about programs in a desired time zone on each date by operating the operation device.
   When the user operates the operation device, when the areas of the plurality of program display sections displayed on the screen include the ends of the program display sections of the individual dates and the beginnings of the program display sections of the next dates, the ends of the program display sections of the individual dates and the beginnings of the program display sections of the next dates are continuously displayed in the same program display sections.
   Thus, even when the areas of the plurality of program display sections displayed on the screen are moved across successive dates on the basis of an operation of the operation device by the user, the ends of the program display sections of the individual dates and the beginnings of the program display sections of the next dates are not switched on the screen.
   Thus, the contents of the plurality of program display sections displayed on the screen are not wholly changed, so that the program table can be generated in a shorter time and the program table can be displayed on the display in a shorter time. Also, the ends of the program display sections of the individual dates and the beginnings of the program display sections of the next dates can be visually recognized at the same time, and the continuity of the ends of the program display sections of the individual dates and the beginnings of the program display sections of the next dates can be visually recognized. Accordingly, the user can check the information in the program table displayed on the screen without feeling stressed.
(8) According to still another aspect of the present disclosure, a display program that can be executed by a processing device to display a program table in a display includes the processes of: receiving a broadcast signal and extracting program scheduling information from the received broadcast signal, generating a program table on the basis of the extracted program scheduling information, displaying on a screen at least a partial area of the generated program table, and moving the area of the program table displayed on the screen through an operation of an operation device by a user, wherein the program table includes a time axis indicating broadcast schedule time of programs, a date axis provided to cross the time axis to indicate broadcast schedule days of the programs, and a plurality of program display sections provided to extend along the time axis for individual dates along the date axis, and the program table has at least one program frame displayed in any of the plurality of program display sections and showing information about a program, and wherein the process of generating the program table causes the processing device to perform the process of moving the areas of the plurality of program display sections displayed on the screen along the time axis on the basis of an operation of the operation device, and, when the areas of the plurality of program display sections displayed on the screen include ends of the program display sections of individual dates and beginnings of the program display sections of next dates, displaying the ends of the program display sections of the individual dates and the beginnings of the program display sections of the next dates continuously in the same program display sections.

In this display program, a broadcast signal is received and program scheduling information is extracted from the received broadcast signal. A program table is generated on the basis of the extracted program scheduling information. Then, at least a partial area of the generated program table is displayed in the display.

The program table includes a time axis indicating broadcast schedule time of programs, a date axis provided to cross the time axis to indicate broadcast schedule days of the programs, and a plurality of program display sections provided to extend along the time axis for individual dates along the date axis.

At least one program frame showing information about a program is displayed in any of the plurality of program display sections. The user can easily and certainly recognize information about the program shown by the program frame.

The areas of the plurality of program display sections displayed on the screen are moved along the time axis on the basis of an operation of the operation device by the user. Thus, the user can easily and certainly recognize information about programs in a desired time zone on each date by operating the operation device.

When the user operates the operation device, when the areas of the plurality of program display sections displayed on the screen include the ends of the program display sections of the individual dates and the beginnings of the program display sections of the next dates, the ends of the program display sections of the individual dates and the beginnings of the program display sections of the next dates are continuously displayed in the same program display sections.

Thus, even when the areas of the plurality of program display sections displayed on the screen are moved across successive dates on the basis of an operation of the operation device by the user, the ends of the program display sections of the individual dates and the beginnings of the program display sections of the next dates are not switched on the screen.

Thus, the contents of the plurality of program display sections displayed on the screen are not wholly changed, so that the program table can be generated in a shorter time and the program table can be displayed on the display in a shorter time. Also, the ends of the program display sections of the individual dates and the beginnings of the program display sections of the next dates can be visually recognized at the same time, and the continuity of the ends of the program display sections of the individual dates and the beginnings of the program display sections of the next dates can be visually recognized. Accordingly, the user can check the information in the program table displayed on the screen without feeling stressed.

According to the display apparatus, display method, and display program according to the present invention, a user can check information in a program table displayed on a screen without feeling stressed.

### [Brief Description of the Drawings]

[FIG. 1] FIG. 1 is a block diagram illustrating the configuration of a display apparatus according to one embodiment of the present invention.
[FIG. 2] FIG. 2 is a schematic diagram illustrating the input device of FIG. 1.
[FIG. 3] FIG. 3 is a diagram showing an example of a one-station program table displayed in the display of the display apparatus of FIG. 1.
[FIG. 4] FIG. 4 is a diagram for illustrating the concept of the operation of scrolling the one-station program table displayed on the television screen TJ.
[FIG. 5] FIG. 5 is a diagram for illustrating a first example of movement of the focus.
[FIG. 6] FIG. 6 is a diagram for illustrating the first example of movement of the focus.
[FIG. 7] FIG. 7 is a diagram for illustrating a second example of movement of the focus.
[FIG. 8] FIG. 8 is a diagram for illustrating the second example of movement of the focus.
[FIG. 9] FIG. 9 is a diagram for illustrating an example of the operation of scrolling a one-station program table in the horizontal axis direction.
[FIG. 10] FIG. 10 is a diagram for illustrating the example of the operation of scrolling the one-station program table in the horizontal axis direction.
[FIG. 11] FIG. 11 is a flowchart of a one-station program table display program.
[FIG. 12] FIG. 12 is a flowchart illustrating a first focus moving program.
[FIG. 13] FIG. 13 is a flowchart illustrating a second focus moving program.
[FIG. 14] FIG. 14 is a flowchart illustrating a scrolling program.
[FIG. 15] FIG. 15 is a diagram showing an example of a program table for a given number of days from the time of transmission.
[FIG. 16] FIG. 16 is a diagram showing an example of a program table displayed on the television screen of a conventional receiving apparatus.
[FIG. 17] FIG. 17 is a diagram illustrating an example of a one-station program table.

### [Best Mode for Carrying out the Invention]

A display apparatus, a display method, and a display program according to one embodiment of the present invention will be described referring to the drawings.

In this embodiment, the display apparatus is a television receiver that receives a broadcast signal for programs transmitted from a broadcasting station.

Also, in this embodiment, information about programs scheduled to be broadcasted (program scheduling information) is multiplexed as Electric Program Guide (EPG) data on the broadcast signal and sent from the broadcasting station to the display apparatus.

The program scheduling information is information composed of multiple pieces of program information. The program information is information about each broadcast-scheduled program, at least including the broadcasting station and the broadcast scheduled date and time. In this embodiment, the program information includes information for allowing viewers to search for desired programs, such as program genre, program description, and program cast, or link information to information related to the programs, for example.

In the display apparatus of this embodiment, a program table showing information about broadcast-scheduled programs from a single TV station alone is displayed on the basis of the EPG data. A program table displayed in such a manner is hereinafter referred to as "a one-station program table".

According to the program arrangement information standard (STD-B10) used in digital broadcasting systems, the contents of EPG data sent from a transmitting system to a receiving system are limited to programs that are scheduled to be broadcasted in eight days after the EPG data was transmitted; but, in this embodiment, EPG data includes information about programs scheduled to be broadcasted in 15 days after the time of transmission of EPG data.

### (1) Configuration of Display Apparatus

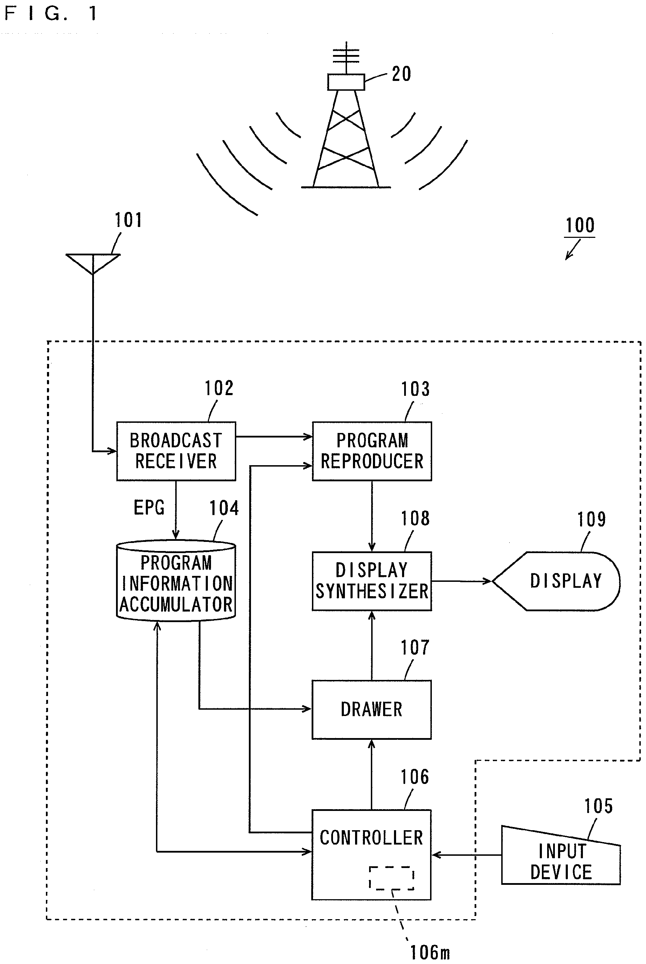

FIG. 1 is a block diagram illustrating the configuration of a display apparatus according to one embodiment of the present invention. As shown in FIG. 1, the display apparatus 100 includes a receiving antenna 101, a broadcast receiver 102, a program reproducer 103, a program information accumulator 104, an input device 105, a controller 106, a drawer 107, a display synthesizer 108, and a display 109. FIG. 1 shows the main body of the display apparatus 100 with dotted line.

The receiving antenna 101 receives broadcast waves and converts the waves into electric signal form. Thus, the broadcast waves received from the broadcasting station apparatus 20 are given to the broadcast receiver 102 in the form of an electric signal. In this embodiment, the receiving antenna 101 is a television broadcast receiving antenna used for common television receivers. The television broadcasting includes terrestrial digital broadcasting and satellite digital broadcasting.

The broadcast receiver 102 includes a high-frequency tuner and a transport stream (hereinafter referred to simply as TS) decoder not shown. Thus, in the broadcast receiver 102, the high-frequency tuner selects a station by selecting frequencies of broadcast waves received at the receiving antenna 101. The selected broadcast signal is thus given to the TS decoder.

The TS decoder of the broadcast receiver 102 decodes the broadcast signal given from the high-frequency tuner, and extracts packets of EPG data, video data and sound data. Thus, the packets of video data and sound data of the program broadcasted from a particular broadcasting station are given to the program reproducer 103. The packets of EPG data are given to the program information accumulator 104.

The program reproducer 103 reproduces the video data and sound data given from the broadcast receiver 102. In this embodiment, the program reproducer 103 is an MPEG (Motion Picture Experts Group) decoder, for example.

The video data reproduced by the program reproducer 103 is given to the display synthesizer 108. On the other hand, sound data is given to a sound data converter not shown, and converted from digital to analog form. The analog-converted sound data is outputted from a sound output unit not shown.

As described above, EPG data is multiplexed on the broadcast signal sent from the broadcasting station apparatus 20 to the display apparatus 100. The program information accumulator 104 accumulates EPG data given from the broadcast receiver 102. Also, the program information accumulator 104 gives the accumulated EPG data to the drawer 107 according to a command signal given from the controller 106.

The input device 105 is operated by a user. In this embodiment, the input device 105 is a remote controller. Accordingly, the main body of the display apparatus 100 includes a receiver (not shown) for receiving signals sent from the remote controller. The remote controller will be described in detail later.

As well as a remote controller, the input device 105 can be a keyboard, a pointing device, a speech recognizer, an image recognizer, or a combination thereof.

The controller 106 is composed of a CPU (Central Processing Unit) and a storage 106m, for example. The storage 106m stores a one-station program table display program, a first focus moving program, a second focus moving program, and a scrolling program described later. The controller 106 controls the operations of components of the display apparatus 100 on the basis of the programs stored in the storage 106m.

The controller 106 also manages dialog with a user. The dialog with a user is realized with GUI (Graphic User Interface) using OSD (On Screen Display).

The drawer 107 generates graphic images for OSD on the basis of EPG data given from the program information accumulator 104. Generated images are given to the display synthesizer 108.

The display synthesizer 108 synthesizes video data given from the program reproducer 103 and images given from the drawer 107, and outputs the synthesized video data to the display 109. The video of the program and OSD are thus displayed on the display 109.

The display 109 is formed of a plasma display panel, a liquid-crystal display panel, or an organic electroluminescent panel, for example.

### (2) Input Device

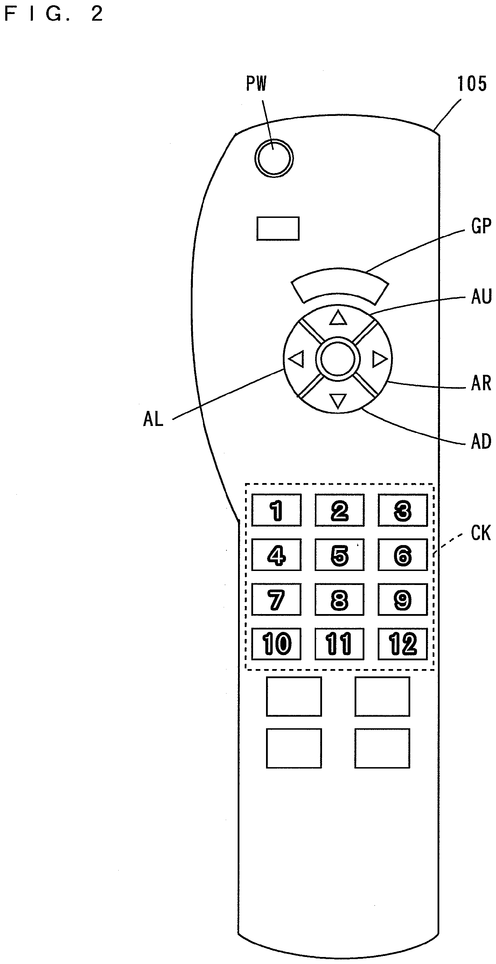

FIG. 2 is a schematic diagram illustrating the input device 105 of FIG. 1.

As shown in FIG. 2, the input device 105 has a power button PW, a one-station program table button GP, a right button AR, a left button AL, an up button AU, a down button AD, channel buttons CK, and so on.

The power button PW is operated by a user to turn on/off the power supply to the display apparatus 100. The one-station program table button GP is operated by a user to display a one-station program table based on EPG data on the display 109 of FIG. 1.

The right button AR, left button AL, up button AU and down button AD are operated by a user to move a focus in the one-station program table displayed on the display 109. The focus will be described in detail later.

The channel buttons CK include multiple buttons. Different channels are assigned to individual buttons. When a user presses a button, the program of the channel assigned to that button is displayed on the display 109.

In the description below, the right button AR, left button AL, up button AU and down button AD are also referred to together as cursor buttons.

### (3) Example of Display of One-station Program Table

For example, a user presses the one-station program table button GP of FIG. 2 while viewing a program of TV station A. Then, a one-station program table of TV station A is displayed on the television screen TJ of the display 109 of FIG. 1.

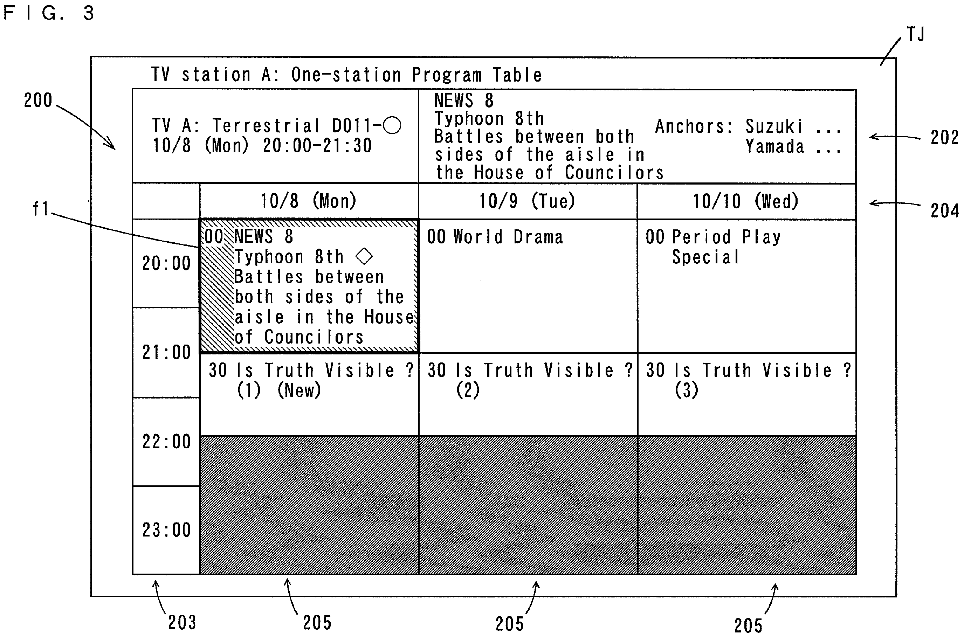

FIG. 3 is a diagram showing an example of the display of a one-station program table displayed on the display 109 of the display apparatus 100 of FIG. 1.

A focused program display section 202 is displayed in an upper part of the television screen TJ. The focused program display section 202 displays detailed information about a focused program described later.

A time display section 203, a date display section 204, and program display sections 205 are displayed under the focused program display section 202.

The time display section 203 shows broadcast schedule time in the vertical axis direction. In the example of FIG. 3, the time display section 203 shows broadcast schedule time in hours from twenty to twenty three.

The date display section 204 shows broadcast scheduled dates in the horizontal axis direction. In the example of FIG. 3, the dates of October 8, October 9, and October 10, together with the days of the week, are arranged in this order in the horizontal axis direction.

In this embodiment, the program display sections 205 display program frames, halt frames, and undetermined frames, described later, along the time displayed in the time display section 203. The program display sections 205 form a so-called radio/TV channel guide.

Among programs firmly scheduled to be broadcasted from TV station A, programs scheduled to be broadcasted in the time zone displayed in the time display section 203 are associated with program frames. Broadcast halt times of TV station A are associated with halt frames. Time periods in which broadcast-scheduled programs have not been determined are associated with undetermined frames.

In FIG. 3, program frames and halt frames are shown as rectangular frames. Also, in FIG. 3, the halt frame from 22:30 to 24:00 on each broadcast-scheduled day is hatched dark.

A user can select one of the plurality of frames displayed in the one-station program table 200 by operating the input device 105 of FIG. 2. The selected frame is highlighted.

In the one-station program table 200 of FIG. 3, the program frame f1 of a program "NEWS 8" from TV station A is highlighted. The one-station program table 200 of FIG. 3 shows highlighting with rough oblique hatching.

In the description below, a state in which a user can thus select a particular frame is called "focus". Also, the broadcast-scheduled program associated with a program frame selected by the focus is called "a focused program".

Thus, in FIG. 3, the program "News 8" scheduled to be broadcasted at 20:00 on October 8 is the focused program. The focused program display section 202, describe above, therefore displays detailed information about the program "News 8". The detailed information includes the TV station of the program, broadcast start time, broadcast end time, program title, contents, cast, and so on.

### (4) Concept of Operation of Scrolling One-station Program Table

A user can move the focus from frame to frame by operating the cursor buttons of the input device 105 of FIG. 2. Also, the user can scroll the one-station program table 200 along the time axis (vertical axis) by sequentially moving the focus along the time axis direction (vertical axis direction). Also, the user can scroll the one-station program table 200 along the dates (horizontal axis) by sequentially moving the focus along the date direction (horizontal axis direction).

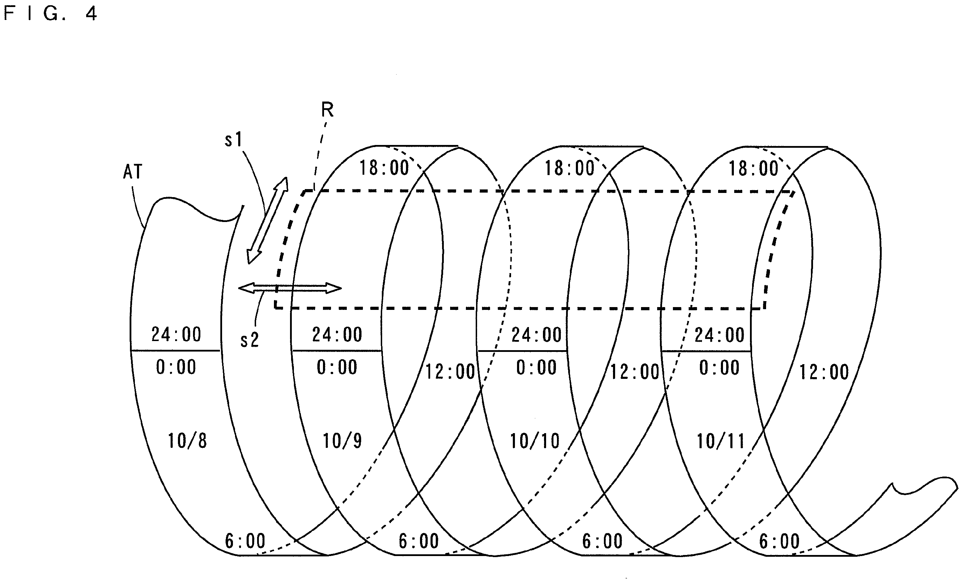

FIG. 4 is a diagram for illustrating the concept of the operation of scrolling the one-station program table 200 displayed on the television screen TJ.

In the display apparatus 100 of this embodiment, the one-station program table 200 to be displayed on the display 109 is generated as conceptually shown in FIG. 4. In FIG. 4, a one-station program table AT of TV station A from October 8 to October 11 is illustrated as a belt extending in a spiral manner. In this one-station program table AT, the broadcast schedule date advances as the belt advances one cycle in the circumferential direction. A broadcast schedule time from 0:00 to 24:00 is assigned in the circumferential direction to each part of the belt that corresponds to a broadcast schedule date.

In this way, in FIG. 4, the one-station program table AT is shown in a belt-like form, without being turned up for each broadcast schedule date. Therefore, there are no time gaps at the connections of the belt corresponding to individual broadcast schedule dates (at the connections between the beginnings and ends of individual dates). That is to say, the one-station program table AT has no seams between individual broadcast schedule dates.

Now, in FIG. 4, the area shown by thick broken line is assumed to be a displayed region R that is displayed on the television screen TJ. In this case, when the one-station program table 200 of FIG. 3 is scrolled in the time axis direction, the displayed region R in FIG. 4 is moved in the direction of arrow s1 (circumferential direction).

For example, suppose that, in the one-station program table 200 shown in FIG. 3, the time zone to be displayed is set in hours from twenty to twenty three, and the broadcast schedule dates are set from October 8 to October 10.

In this state, when the user operates the input device 105 of FIG. 1 to scroll the displayed region of the one-station program table 200 in the time axis direction (vertical axis direction), the displayed region R in FIG. 4 moves in the circumferential direction.

In this case, as shown in FIG. 4, there are no time gaps at the connections between the parts corresponding to individual broadcast schedule dates, so that the displayed region R smoothly moves along the circumferential direction. Accordingly, on the television screen TJ of FIG. 3, the one-station program table 200 is smoothly scrolled.

That is to say, when the one-station program table 200 of FIG. 3 is scrolled in the time axis direction, the contents of the information displayed in the one-station program table 200 are not considerably and entirely changed even when the one-station program table 200 is scrolled across dates.

When the user scrolls the displayed region of the one-station program table 200 in the date direction (horizontal axis direction) by operating the input device 105 of FIG. 1, the displayed region R in FIG. 4 moves in the horizontal axis direction. In this case, the contents of the information displayed in the one-station program table 200 change for one day. Then, the user can check the one-station program table 200 newly displayed by scrolling.

As described above, in the display apparatus 100 of this embodiment, the contents displayed in the one-station program table 200 are not entirely switched as the broadcast schedule dates change, even when the one-station program table 200 is scrolled in the time axis direction across dates. Accordingly, the user can scroll the displayed region of the one-station program table 200 in the vertical axis direction without feeling stressed.

### (5) First Example of Movement of Focus

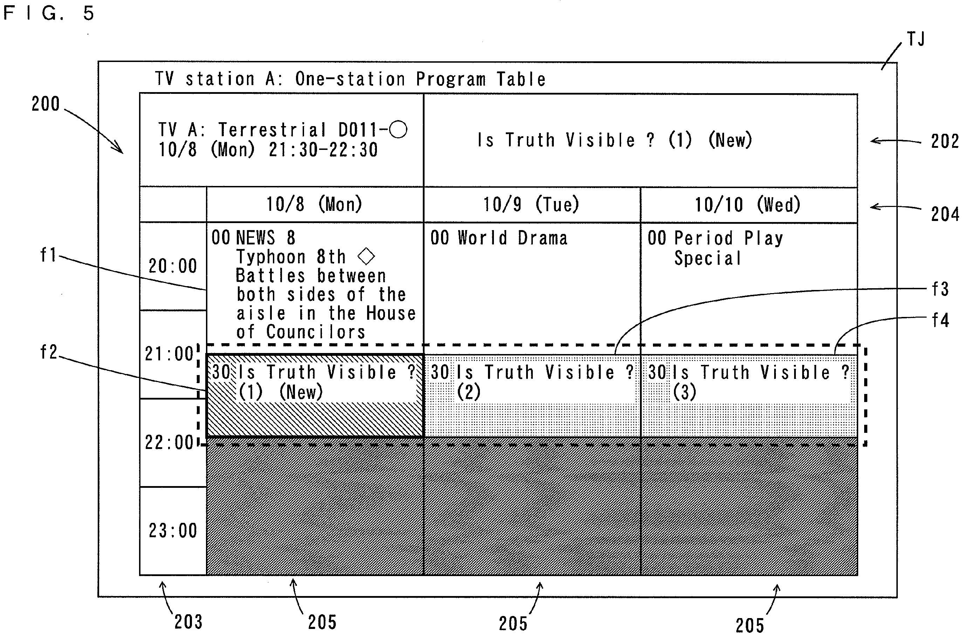

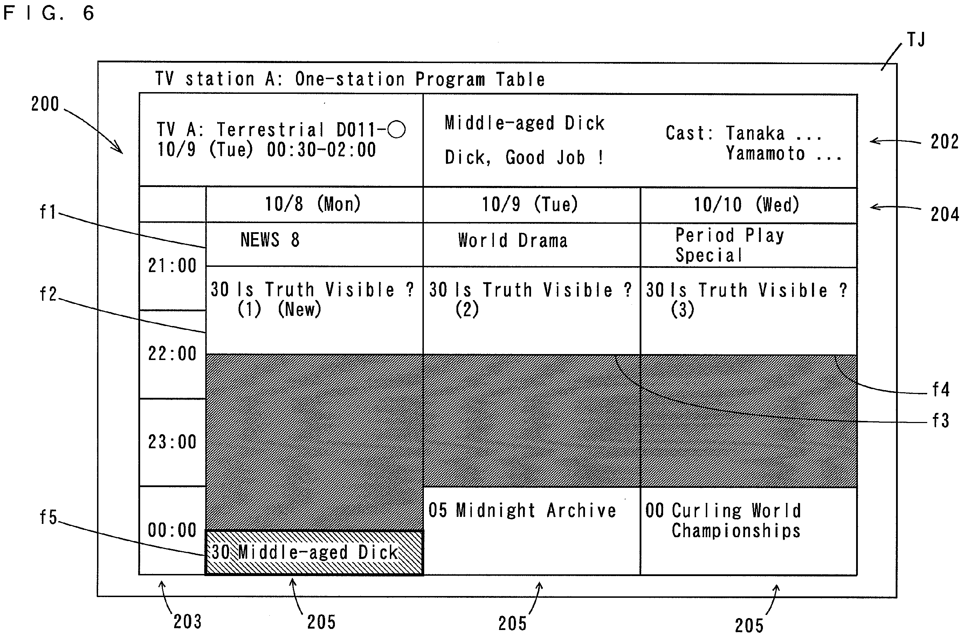

To illustrate how the one-station program table 200 is displayed when the focus is moved, a first example of movement of the focus will be described referring to FIGS. 3, 5 and 6. FIGS. 5 and 6 are diagrams illustrating the first focus movement example.

For instance, suppose, as shown in the one-station program table 200 of FIG. 3, the focus is positioned in the program frame f1 of the program "News 8" on October 8, and the user pressed the down button AD of FIG. 2.

In this case, as shown in FIG. 5, the program frame f1 of the program "News 8" on October 8 is changed from a highlighted state to a normal display state. Then, the program frame f2 of the program "Is Truth Visible?" located under the program frame f1 is highlighted.

That is to say, as the user presses the down button AD, the focus moves from the program frame f1 to the program frame f2 that is displayed on the future side of the program frame f1. Then, the focused program display section 202 displays detailed information about the program "Is Truth Visible?".

In this example, the focused program display section 202 shows: TV station A that broadcasts "Is Truth Visible?", broadcast start time "21:30 on October 8", broadcast end time "22:30 on October 8", and program title "Is Truth Visible?".

Now, the program "Is Truth Visible?" associated with the program frame f2 is a series program that is scheduled to be broadcasted at the same time every day. Accordingly, the program display sections 205 of October 9 and October 10, too, show program frames f3 and f4 of the program "Is Truth Visible?".

In this embodiment, "series programs" mean programs to which common information is assigned, such as programs having a common title, as well as programs scheduled to be broadcasted at the same time at given cycles as described above.

In this example, the program frame f2 on October 8 is highlighted as the focus moves, and the program frames f3 and f4 on October 9 and October 10, too, are highlighted.

Thus, the user can easily recognize that the broadcast-scheduled program of the program frame f2, where the focus is currently positioned, is a series program. Also, since the program frames f3 and f4 of the series programs broadcasted on other days are also highlighted, the user can easily recognize on which days the series programs corresponding to the program frame f2 where the focus is positioned will be broadcasted.

In this way, a state in which a plurality of program frames f2, f3 and f4 are highlighted as program frames of broadcast-scheduled programs having a certain relation is called "group focus".

As shown by thick broken line in FIG. 5, when the program frames f2, f3 and f4 highlighted by group focus are adjacent each other, a line surrounding the program frames f2, f3 and f4 may be displayed.

In this embodiment, display methods shown below may be used so that, among a plurality of program frames specified by group focus, the focused program selected by the user and series programs other than the focused program can be easily distinguished.

In the description below, among a plurality of program frames specified by group focus, the program frame f2 to which the focus was moved by the user (the program frame of the focused program) is referred to as a main focused program frame f2, and the program frames f3 and f4 of the series programs other than the focused program are referred to as subordinate focused program frames.

In group focusing, the light-emission brightness may be set different between the main focused program frame f2 and the subordinate focused program frames f3 and f4.

In FIG. 5, the main focused program frame f2 is hatched with rough oblique lines, in order to indicate that the main focused program frame f2 is highlighted with high brightness. On the other hand, the subordinate focused program frames f3 and f4 are hatched light in order to indicate that the subordinate focused program frames f3 and f4 are highlighted with low brightness. Thus, the user can easily and certainly distinguish the focused program and the series programs other than the focused program.

This example has described that the group focus is indicated with highlighting; however, instead of highlighting, background colors with different levels of saturation may be set to the main focused program frame f2 and to the subordinate focused program frames f3 and f4.

Alternatively, the font color of a character string displayed in the main focused program frame f2, and the font color of character strings displayed in the subordinate focused program frames f3 and f4, may be set different. Also, the light-emission brightness of the main focused program frame f2 or the subordinate focused program frames f3 and f4 may be varied with time.

Next, suppose that, with the focus positioned in the program frame f2 of the program "Is Truth Visible?", the user further pressed the down button AD of FIG. 2 continuously, as shown in the one-station program table 200 of FIG. 6.

In the one-station program table 200 of FIG. 5, a halt frame is displayed under the program frame f2 where the focus is positioned. Then, the focus moves to the halt frame. The focus is thus positioned at the lower end of the program display section 205.

Accordingly, as the user presses the down button AD again, the one-station program table 200 is scrolled to the future side for a certain time period as shown in FIG. 6.

In this example, the one-station program table 200 is scrolled one hour to the future side. Then, the time display section 203 displays broadcast schedule time in hours from twenty one to zero (twenty four).

When the one-station program table 200 is scrolled one hour to the future in this way, the program "Middle-aged Dick" becomes a broadcast-scheduled program in the time zone displayed in the time display section 203.

Then, as shown in FIG. 6, the focus moves to the program frame f5 of the program "Middle-aged Dick" in the one-station program table 200.

As above, the user can scroll the one-station program table 200 and move the focus to a desired program frame, by pressing the cursor buttons of the input device 105 of FIG. 2.

Then, even when the one-station program table is scrolled to move across the time at which the one-station program table is originally to be turned up for each date, the contents of the one-station program table 200 displayed on the television screen TJ are not entirely changed. Thus, the user can view the one-station program table 200 without feeling stressed. Also, it does not take a long time to draw the one-station program table 200 when scrolled.

The description above has shown an example in which the focus is moved in the time axis direction (vertical axis direction), but the user can move the focus also in the date axis direction (horizontal direction) by pressing the right button AR and left button AL of FIG. 2.

In this case, the contents of the program display section 205 for one day are changed on the television screen TJ. The contents displayed in the one-station program table 200 are thus not entirely changed, and the user can view the one-station program table 200 without feeling stressed.

The movement of focus described above is achieved as the controller 106 of FIG. 1 executes a first focus moving program described later.

### (6) Second Example of Movement of Focus

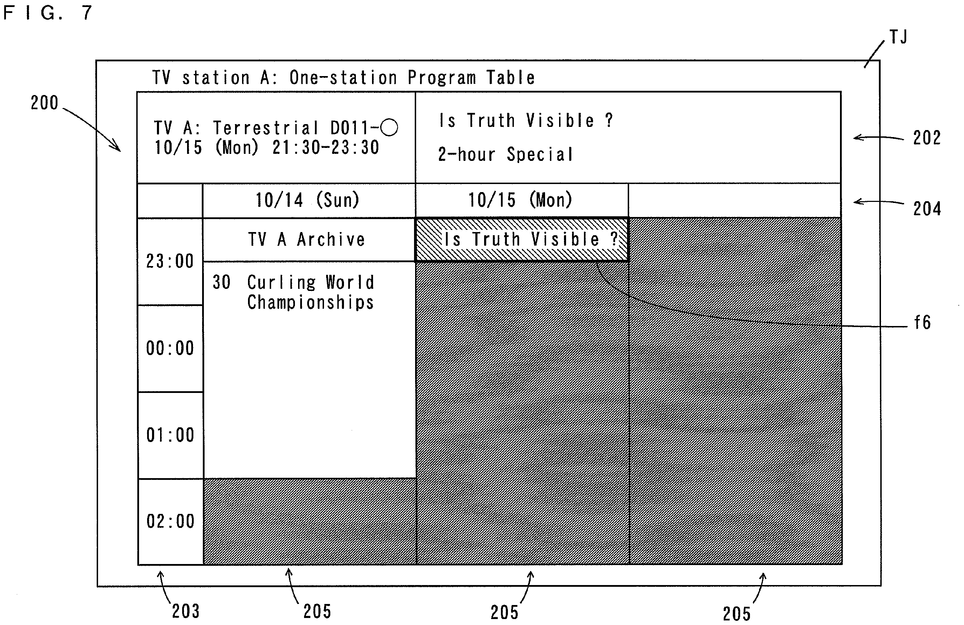

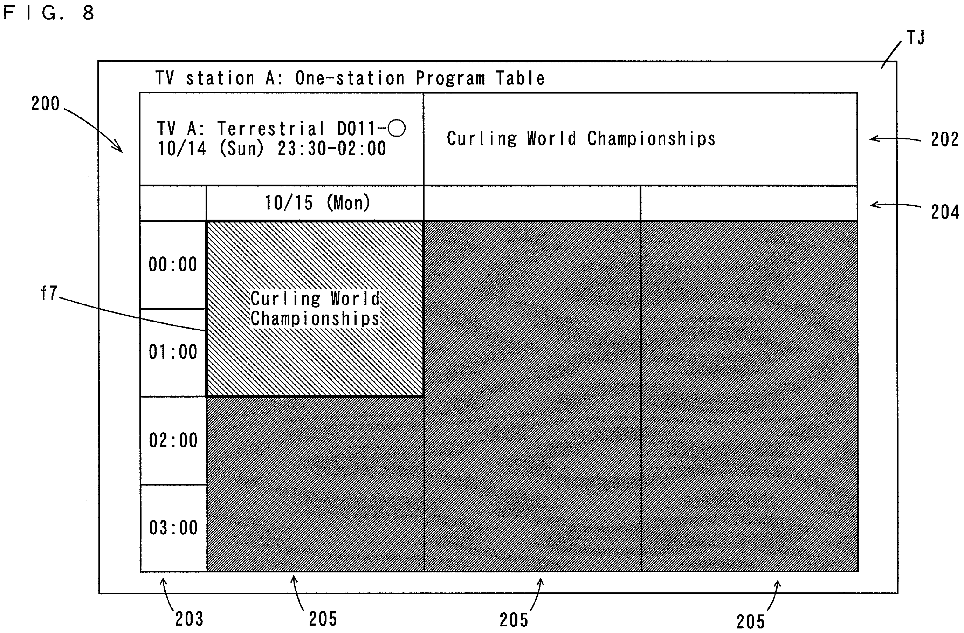

To illustrate how the one-station program table 200 is displayed when the focus is moved, a second example of the movement of the focus will be described referring to FIGS. 7 and 8. FIGS. 7 and 8 are diagrams for illustrating the second focus movement example.

This example assumes that EPG data includes information about broadcast-scheduled programs for 15 days, from October 1 to October 15. In this case, the display 109 of FIG. 1 can display a one-station program table 200 to 24:00 on October 15.

In FIG. 7, the television screen TJ displays a one-station program table 200 indicating broadcast-scheduled programs on October 14 and October 15.

The display apparatus 100 of this embodiment can display program display sections 205 for 3 days on the television screen TJ. Accordingly, in the example of FIG. 7, one program display section 205 is not displaying information about broadcast-scheduled programs.

As shown in FIG. 7, when the user further presses the down button AD of FIG. 2 with the focus positioned in the program frame f6 of the last broadcast-scheduled program on October 15, for example, it is thought that the focus should not be moved because there is no program scheduling information for

October 16.

This is because, when the focus is moved to a time zone where no program scheduling information exists, the user cannot obtain useful information and the user has to take the trouble to return the focus to a time zone where program schedule information exists.

However, in this example, when the user presses the down button AD of FIG. 2 when the focus is positioned in the program frame f6, the one-station program table 200 is scrolled one hour to the future side as shown in FIG. 8.

Then, the time zone displayed in the one-station program table 200 is changed to the time zone from zero to three, and the contents displayed in the date display section 204 are also changed. Then, among the three program display sections 205, the program display section 205 at the center does not display information about broadcast-scheduled programs. Then, after scrolled, the focus, which was positioned in the program frame f6 in the center program display section 205 in FIG. 7, is moved to the program frame f7 displayed in the program display section 205 on the left.

In this way, in this example, the focus is moved to the program frame displayed obliquely downward, though the user pressed the down button AD of FIG. 2. It is thought that such movement of the focus is against user's intention.

However, a user does not always press the down button AD of FIG. 2 only for the purpose of moving the focus. A user sometimes moves the focus for the purpose of scrolling the one-station program table 200.

Accordingly, when the operation of pressing the down button AD is invalidated with the focus positioned in the last program frame f6, the user may feel unnatural since the program table is not scrolled despite the fact that the user pressed the down button AD.

Accordingly, in this example, the focus is moved as described above in order to solve the unnaturalness that the user would feel. This focus movement is achieved as the controller 106 of FIG. 1 executes a second focus moving program described later.

### (7) Example of Scrolling One-station Program Table

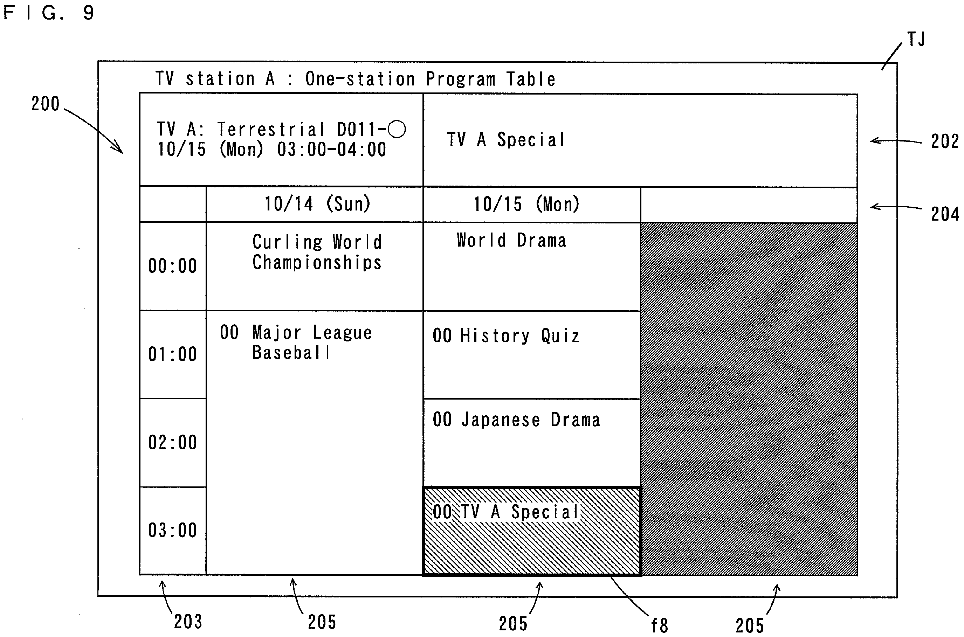

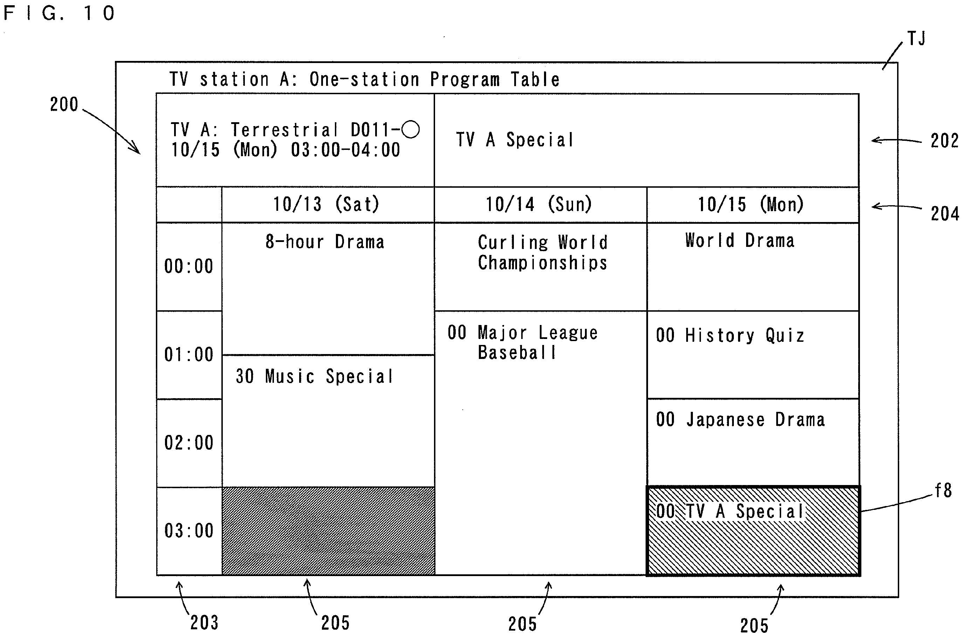

An example of scrolling the one-station program table 200 will be described referring to FIGS. 9 and 10. FIGS. 9 and 10 are diagrams for illustrating an example of the operation of scrolling the one-station program table 200 in the horizontal axis direction.

In this example, as in the second focus movement example, it is assumed that the EPG data includes information about broadcast-scheduled programs for 15 days, from October 1 to October 15. In this case, the display 109 of FIG. 1 can display a one-station program table 200 to 24:00 on October 15.

As mentioned above, the user can scroll the one-station program table 200 in the time axis direction (vertical axis direction) by pressing the down button AD of FIG. 2.

The one-station program table 200 is scrolled in the date direction (horizontal axis direction) when it is scrolled 24 hours in the time axis direction. Then, when the user pressed the down button AD of FIG. 2, for example, one of the three program display sections 205 may display no information about broadcast-scheduled programs as shown in FIG. 9. In the description below, a program display section 205 displaying no information at all is referred to as an empty program display section 205.

In the empty program display section 205, there is no program scheduling information about the date corresponding to that empty program display section 205, and so not only program frames but also halt frames and undetermined frames are not displayed.

In this example, when an empty program display section 205 occurs as the user presses the down button AD, the one-station program table 200 is scrolled in the date direction so that there will be no empty program display section 205.

For example, when an empty program display section 205 occurs as the focus is moved to the program frame f8 of FIG. 9, the one-station program table 200 is scrolled one day in the date direction as shown in FIG. 10. This prevents wasteful use of the display area in the television screen TJ.

This scrolling operation is achieved as the controller 106 of FIG. 1 executes a scrolling program described later.

### (8) One-station Program Table Display Program

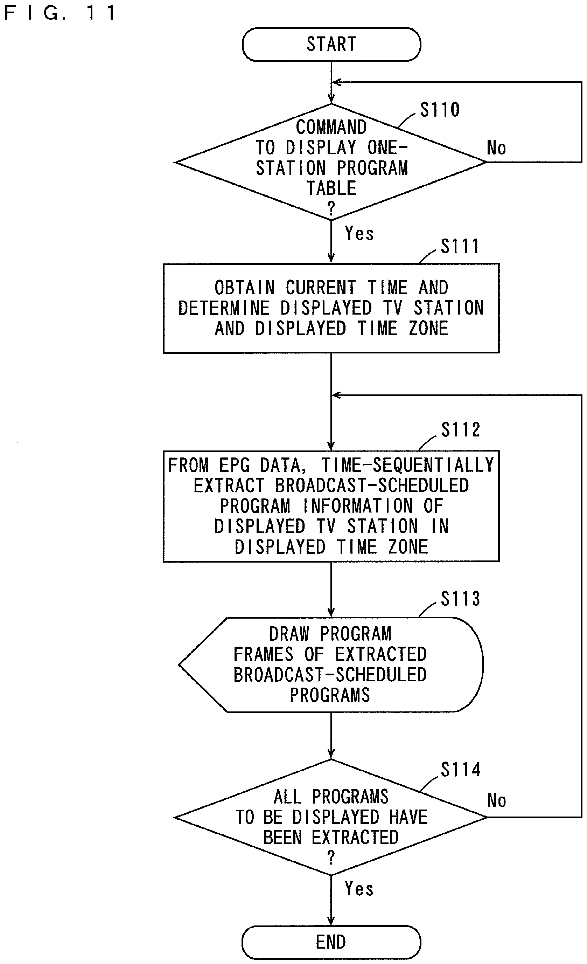

The one-station program table display program by which the display apparatus 100 of FIG. 1 displays the one-station program table 200 will be described. FIG. 11 is a flowchart of the one-station program table display program. As described above, this program is stored in the storage 106m of FIG. 1.

First, the controller 106 of FIG. 1 determines whether it has received a command to display the one-station program table 200 from outside, from a user operating the input device 105 (Step S110).

When receiving a command, the controller 106 identifies the currently selected channel and obtains the current time with built-in timer means, and determines a TV station to be displayed and a time zone to be displayed (Step S111). Then, for the TV station to be displayed, the controller 106 time-sequentially extracts, from the EPG data, information about programs scheduled to be broadcasted in the time zone to be displayed (Step S112).

Next, the controller 106 draws the program frames of the extracted broadcast-scheduled programs on the television screen TJ (Step S113).

Next, the controller 106 determines whether it has extracted all broadcast-scheduled programs in the displayed time zone (Step S114).

When all broadcast-scheduled programs to be displayed have been extracted, the controller 106 ends the operation of displaying the one-station program table 200. On the other hand, when all broadcast-scheduled programs to be displayed have not been extracted, the controller 106 performs the above-described operation of Step S112.

Though not described above, in a time zone where no broadcast-scheduled program is present and a time zone where the scheduling of broadcast-scheduled programs has not been determined, a halt frame and an undetermined frame are drawn in the program display sections 205.

### (9) First Focus Moving Program

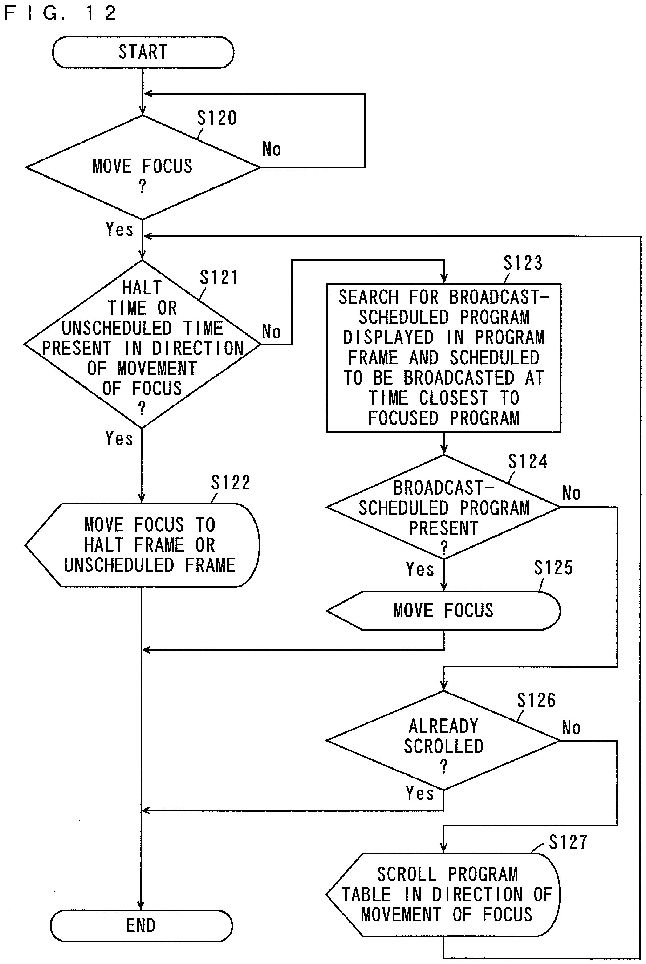

The first focus moving program will be described. FIG. 12 is a flowchart illustrating the first focus moving program. As mentioned earlier, this program is stored in the storage 106m of FIG. 1. This example assumes that the focus is positioned in a program frame before moved.

First, the controller 106 of FIG. 1 determines whether it has received a command to move the focus from outside, from a user operating the input device 105 (Step S120).

When receiving a command to move the focus, the controller 106 determines whether there is a broadcast halt time or a program scheduling undetermined time immediately before or after, in the direction of movement of the focus, the time of the program frame where the focus is currently positioned (Step S121).

When there is a broadcast halt time or a scheduling undetermined time, the controller 106 moves the focus to the halt frame or undetermined frame present immediately before or after the program frame where the focus is currently positioned (Step S122). The movement of the focus thus ends.

When the focus has moved to a halt frame or an undetermined frame, the halt frame or undetermined frame where the focus is positioned may be highlighted, as when the focus is positioned in a normal program frame. Also, instead of highlighting the halt frame or undetermined frame, some pictorial sign may be displayed in part of the one-station program table 200 to indicate that the focus is positioned in a halt frame or an undetermined frame.

When there isn't a broadcast halt time or a program schedule undetermined time, the controller 106 searches for a broadcast-scheduled program that is scheduled to be broadcasted at a time closest to the time of the current focused program in the direction of movement of the focus, and that is associated with a program frame displayed in the one-station program table 200 (Step S123). Then, the controller 106 determines whether there is a corresponding broadcast-scheduled program (Step S124).

When there is a broadcast-scheduled program, the controller 106 moves the focus to the program frame of that broadcast-scheduled program (Step S125). The movement of focus thus ends.

When there isn't a broadcast-scheduled program, the controller 106 determines whether the one-station program table 200 has been already scrolled (Step S126).

When scrolling has already been carried out, the controller 106 ends the operation without moving the focus.

When scrolling has not been carried out, the controller 106 newly determines a time zone to be displayed, and extracts information about broadcast-scheduled programs from EPG data. Then, on the basis of the extracted information, the controller 106 scrolls the one-station program table 200 a certain time length in the direction of movement of the focus (Step S127). After that, the controller 106 performs the above-described operation of Step S121.

### (10) Second Focus Moving Program

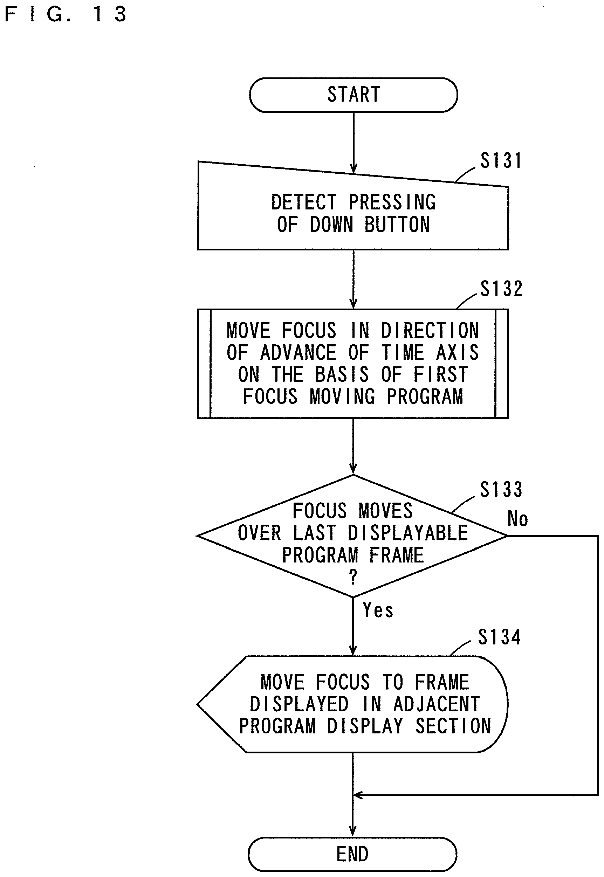

The second focus moving program will be described. FIG. 13 is a flowchart illustrating the second focus moving program. As mentioned earlier, this program is stored in the storage 106m of FIG. 1. This example assumes that the focus is positioned in a program frame before moved.

First, the controller 106 of FIG. 1 determines whether it has received a signal from outside, from a user pressing the down button AD of FIG. 2, to detect pressing of the down button AD (Step S131).

When detecting pressing of the down button AD, the controller 106 moves the focus in the direction of advance of the time axis on the basis of the above-described first focus moving program (Step S132).

Then, the controller 106 determines whether the focus will move past the last program frame that can be displayed on the basis of the EPG data, i.e. past the program frame of the most future broadcast-scheduled program (Step S133).

When the focus moves past the last program frame, the controller 106 moves the focus to a frame displayed in the adjacent program display section 205 (Step S134). The movement of focus thus ends.

On the other hand, when the focus does not move past such a last program frame, the controller 106 ends the movement of focus.

In the Step S134, the frame to which the focus is moved is a program frame, a halt frame, or an undetermined frame that is associated with a time after and closest to the broadcast end time of the program frame from which the focus is moved.

### (11) Scrolling Program

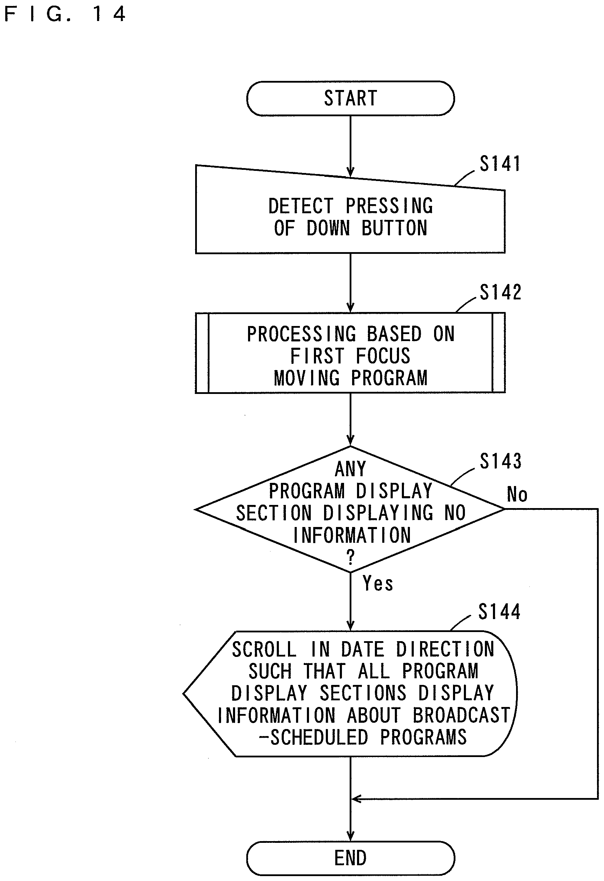

The scrolling program will be described. FIG. 14 is a flowchart illustrating the scrolling program. As mentioned earlier, this program is stored in the storage 106m of FIG. 1.

First, the controller 106 of FIG. 1 determines whether it has received a signal from outside, from a user pressing the down button AD of FIG. 2, to detect pressing of the down button AD (Step S141).

When detecting pressing of the down button AD, the controller 106 moves the focus in the direction of advance of the time axis on the basis of the above-described first focus moving program (Step S142).

Then, the controller 106 determines whether any of the plurality of program display sections 205 displayed on the television screen TJ displays no information about broadcast-scheduled programs at all (Step S143).

When there is a program display section 205 displaying no broadcast-scheduled program information at all, the controller 106 scrolls the one-station program table 200 in the date direction (horizontal axis direction) so that all of the plurality of program display sections 205 display broadcast-scheduled program information (Step S144). The operation based on the scrolling program thus ends.

On the other hand, when there isn't a program display section 205 displaying no broadcast-scheduled program information at all, the controller 106 ends the movement of the focus without scrolling the one-station program table 200 in the date direction (horizontal axis direction).

In this example, the input device 105 of FIG. 2 may continuously give the controller 106 a signal indicating pressing of the down button AD when the pressing of the down button AD has continued for a given time period.

In this case, for example, when the user continues pressing the down button AD, the controller 106 may continuously scroll the one-station program table 200 (key repeat function).

Also, the controller 106 may repeat the operations of Steps S141 and S142 while the key repeat is being made as described above, and perform the operation of Step S143 when the key repeat ends.

In another example, after the operation of Step S142, the controller 106 may determine whether the cursor buttons of the input device 105 of FIG. 2 have been operated for a given time period, and perform the operation of Step S143 when the given time period has passed.

In this scrolling program, when the one-station program table 200 is scrolled in the date direction by the processing of Step S144, the scrolling operation may be displayed in a manner distinguishable from the manner of display of scrolling made by the user operating the input device 105.

For example, suppose that the one-station program table 200 is re-drawn for each column of the program display sections 205 when the user scrolls the one-station program table 200 in the date direction by operating the input device 105. In this case, when the scrolling program scrolls the one-station program table 200 in the date direction, the controller 106 moves the one-station program table 200 in the date direction for each pixel, for example.

Thus, the user can easily distinguish scrolling of the one-station program table 200 based on his/her own intension and scrolling of the one-station program table 200 automatically performed in the display apparatus 100.

When the one-station program table 200 is thus scrolled for each pixel, the display of the one-station program table 200 smoothly changes. This prevents the user from losing track of the focus position.

### (12) Subjects of Group Focus

This embodiment has described that program frames of series programs are subjected to group focus as program frames of broadcast-scheduled programs having a given relation, but program frames subjected to group focus may be determined by the conditions below.

For example, program frames of broadcast-scheduled programs of the same genre, broadcast-scheduled programs in which the same performer appears, and broadcast-scheduled programs that meet user's taste, may be subjected to group focus.

As to broadcast-scheduled programs that meet user's taste, for example, the controller 106 of the display apparatus 100 may monitor what the user views to identify a genre that the viewer likes, and the program frames of broadcast-scheduled programs of the identified genre may be subjected to group focus, or program frames of broadcast-scheduled programs of series programs that the viewer most frequently views (e.g. top three programs) may be subjected to group focus.

The controller 106 of FIG. 1 may determine program frames subjected to group focus on the basis of information included in EPG data, such as program titles, broadcast times, genres, etc.

Also, the controller 106 may determine program frames to be subjected to group focus on the basis of broadcast schedule times, dates or days of the week that are previously set by the user.

Program frames to be subjected to group focus may be determined on the basis of not only EPG data sent from the broadcasting station apparatus 20 but also information sent, e.g. through the Internet, from equipment other than the broadcasting station apparatus 20.

### (13) Effects

In the display apparatus 100 of this embodiment, the one-station program table 200 is scrolled along the time axis direction on the basis of an operation of the input device 105 by a user.

When the user operates the input device 105 and the areas of a plurality of program display sections 205 displayed on the television screen TJ include the ends of the program display sections 205 of the individual dates and the beginnings of the program display sections 205 of the next dates, the ends of the program display sections 205 of the individual dates and the beginnings of the program display sections 205 of the next dates are continuously displayed in the same program display sections 205.

Thus, even when the regions of the plurality of program display sections 205 displayed on the television screen TJ are moved across dates, the ends of the program display sections 205 of the individual dates and the beginnings of the program display sections 205 of the next dates are not switched on the television screen TJ.

Thus, the contents of the plurality of program display sections 205 displayed on the television screen TJ are not entirely changed, so that the one-station program table 200 can be displayed in a shorter time. Also, the user does not have to re-recognize all of the contents of the plurality of program display sections 205 displayed on the television screen TJ. Accordingly, the user can scroll the one-station program table 200 without feeling stressed. As a result, the user can check the one-station program table 200 without feeling stressed.

### (14) Other Embodiments

In the embodiment above, the controller 106 is realized with a CPU, and the one-station program table display program, first focus moving program, second focus moving program, and scrolling program, but this is not intended to be restrictive; the controller 106 may be realized with hardware such as electronic circuitry.

Also, the drawer 107 may be realized with a CPU and program, or with hardware such as electronic circuitry.

Similarly, the display synthesizer 108 may be realized with a CPU and program, or with hardware such as electronic circuitry.

### (15) Correspondences between Elements of Claims and Elements of Embodiments

In the following paragraphs, non-limiting examples of correspondences between various elements recited in the claims below and those described above with respect to various preferred embodiments of the present invention are explained.

In the embodiments described above, the broadcast receiver 102 is an example a receiver, the program information accumulator 104, input device 105, drawer 107, and display synthesizer 108 of FIG. 1 are examples of a program table generator, the input device 105 is an example of an operation device, and the controller 106 of FIG. 1 is an example of a processing device.

The vertical axis shown by the time display section 203 is an example of a time axis, the horizontal axis shown by the date display section 204 is an example of a date axis, the highlighting display of the main focus program frame f2 of FIG. 5 is an example of a first display manner, and the highlighting display of the subordinate focus program frames f3 and f4 of FIG. 5 is an example of a second display manner.

Also, undetermined frames are examples of an empty frame indicating an undetermined period, halt frames are examples of an empty frame indicating a program halt period, and the first focus moving program and one-station program table display program are examples of a display program.

Various other elements having configurations or functions described in the claims can also be used as elements of the claims.

### [Industrial Applicability]

The present invention is effectively applicable when program information for a plurality of days is displayed in the form of a radio/TV channel guide. Also, the present invention is applicable not only to program information but also generally to information having a time axis. For example, the present invention is effectively applicable also to the display of a timetable of a transit system, for example.

## Claims

1. A display apparatus (100) comprising:
a receiver (102) that is adapted to receive a broadcast signal and to extract program scheduling information from the received broadcast signal;
a program table generator (104, 105, 107, 108) that is adapted to generate a program table on the basis of the program scheduling information extracted by said receiver, said program table (200) including a time axis (203) indicating broadcast schedule time of programs, a date axis (204), provided to cross said time axis, indicating broadcast schedule days of the programs, and a plurality of program display sections (205) provided to extend along said time axis for individual dates along said date axis, said program table having at least one program frame displayed in any of said plurality of program display sections and showing information about a program;
a display (109) that is adapted to display on a screen (TJ) at least a partial area of the program table generated by said program table generator; and
a controller (106) that is adapted to control said program table generator such that at least the partial area of the program table generated by said program table generator is displayed on said screen,
**characterized in that**
said program table has an empty frame indicating a broadcast-scheduled program undetermined period or a program halt period in an area where no said program frame exists in each program display section,
the apparatus further comprises:
an operation device (105) that is operable by a user to scroll the partial area of the program table displayed on said screen in a time axis and/or date axis direction, and to select one program frame or one empty frame of the program table,
said controller (106) is adapted, when a selection of a program frame is moved from program frame to program frame along said time axis on the basis of an operation of said operation device, to control said program table generator such that the partial area of the program table displayed on the screen is scrolled in said time axis direction, and such that, when the partial area of the program table displayed on the screen is scrolled only in the time axis direction across dates, program frames at ends of individual dates and program frames at beginnings of next dates are continuously displayed in the program display sections of the individual dates, and
said controller (106) is adapted, when a last program frame in a program display section of a last date, where program scheduling information exists, including at least one program frame is being selected and the user operates said operation device to select a following empty frame, to control said program table generator such that a program frame or an empty frame of a program display section of an immediately preceding date that starts at a time after said last program frame is selected.

2. The display apparatus according to claim 1,
wherein said controller (106) is adapted to control said program table generator such that a program frame selected on the basis of an operation of said operation device is displayed in a first display manner as a first program frame, and such that, when there is another program frame having a predetermined relation with said first program frame, that another program frame having the predetermined relation with said first program frame is displayed in a second display manner as a second program frame, and
wherein said first and second display manners are set to be different from a display manner of an area other than said first and second program frames.

3. The display apparatus according to claim 2, wherein said predetermined relation is that the program of said second program frame is a series program having a common title with the program of said first program frame.

4. The display apparatus according to claim 2, wherein said predetermined relation is that the program of said second program frame is included in a common genre with the program of said first program frame.

5. The display apparatus according to claim 1,
wherein, when a last selected frame of a program display section of a last date including at least one program frame or empty frame is selected, said controller (106) is adapted to control said program table generator to scroll the partial area of the program table displayed on said screen in said date axis direction such that an area of a program display section having no program frame and no empty frame is not displayed on the screen.

6. A display method of displaying a program table in a display, comprising the steps of:
receiving a broadcast signal and extracting program scheduling information from the received broadcast signal;
generating a program table on the basis of the extracted program scheduling information, said program table (200) including a time axis (203) indicating broadcast schedule time of programs, a date axis (204), provided to cross said time axis, indicating broadcast schedule days of the programs, and a plurality of program display sections (205) provided to extend along said time axis for individual dates along said date axis, said program table having at least one program frame displayed in any of said plurality of program display sections and showing information about a program; and
displaying on a screen at least a partial area of the generated program table,
**characterized in that**
said program table has an empty frame indicating a broadcast-scheduled program undetermined period or a program halt period in an area where no said program frame exists in each program display section, and
the display method further comprises:
scrolling the partial area of the program table displayed on said screen in a time axis and/or date axis direction and selecting one program frame or one empty frame of the program table through an operation of an operation device by a user,
said step of generating said program table comprises, when a selection of a program frame is moved from program frame to program frame along said time axis, a step of scrolling (S127, S144) the partial area of the program table displayed on the screen in said time axis direction, and, when the partial area of the program table displayed on the screen is scrolled only in the time axis direction across dates, displaying program frames at ends of individual dates and program frames at beginnings of next dates continuously in the program display sections of the individual dates, and
said step of generating said program table comprises, when a last program frame in a program display section of a last date, where program scheduling information exists, including at least one program frame is being selected and the user operates said operation device to select a following empty frame, selecting a program frame or an empty frame of a program display section of an immediately preceding date that starts at a time after said last program frame.

7. A display program being executable by a processing device to display a program table in a display, causing said processing device, when being executed thereby, to perform:
receiving a broadcast signal and extracting program scheduling information from the received broadcast signal;
generating a program table on the basis of the extracted program scheduling information, said program table (200) including a time axis (203) indicating broadcast schedule time of programs, a date axis (204), provided to cross said time axis, indicating broadcast schedule days of the programs, and a plurality of program display sections (205) provided to extend along said time axis for individual dates along said date axis, said program table having at least one program frame displayed in any of said plurality of program display sections and showing information about a program; and
displaying on a screen at least a partial area of the generated program table,
**characterized in that**
said program table has an empty frame indicating a broadcast-scheduled program undetermined period or a program halt period in an area where no said program frame exists in each program display section, and
the display program further causes said processing device, when being executed thereby, to perform: scrolling the partial area of the program table displayed on said screen in a time axis and/or date axis direction and selecting one program frame or one empty frame of the program table through an operation of an operation device by a user,
said process of generating said program table comprises, when a selection of a program frame is moved from program frame to program frame along said time axis, a process of scrolling (S127, S144) the partial area of the program table displayed on the screen in said time axis direction, and, when the partial area of the program table displayed on the screen is scrolled only in the time axis direction across dates, a process of displaying program frames at ends of individual dates and program frames at beginnings of next dates continuously in the program display sections of the individual dates, and
said process of generating said program table comprises, when a last program frame in a program display section of a last date, where program scheduling information exists, including at least one program frame is being selected and the user operates said operation device to select a following empty frame, selecting a program frame or an empty frame of a program display section of an immediately preceding date that starts at a time after said last program frame.

## Patentansprüche

1. Anzeigevorrichtung (100) mit:
einem Empfänger (102), der angepasst ist zum Empfangen eines Rundfunksignals und zum Extrahieren von Programmplanungsinformationen aus dem empfangenen Rundfunksignal;
einem Programmtabellengenerator (104, 105, 107, 108), der angepasst ist zum Erzeugen einer Programmtabelle auf Grundlage der durch den Empfänger extrahierten Programmplanungsinformationen, die Programmtabelle (200) umfassend eine Zeitachse (203), die eine geplante Ausstrahlungszeit von Programmen bezeichnet, eine Datumsachse (204), die Zeitachse kreuzend bereitgestellt, die geplante Ausstrahlungstage von den Programmen bezeichnet, und eine Vielzahl von Programmanzeigeabschnitten (205), sich entlang der Zeitachse für einzelne Daten entlang der Datumsachse erstreckend bereitgestellt, wobei die Programmtabelle zumindest einen Programmrahmen aufweist, der in einem der Vielzahl von Programmanzeigeabschnitten angezeigt wird und Informationen über ein Programm zeigt;
einer Anzeige (109), die angepasst ist zum Anzeigen zumindest eines Teilbereichs der durch den Programmtabellengenerator erzeugten Programmtabelle auf einem Bildschirm (TJ); und
einer Steuereinheit (106), die angepasst ist zum Steuern des Programmtabellengenerators, sodass zumindest der Teilbereich der durch den Programmtabellengenerator erzeugten Programmtabelle auf dem Bildschirm angezeigt wird,
**dadurch gekennzeichnet, dass**
die Programmtabelle einen Leerrahmen, der eine Periode einer Unbestimmtheit eines zur Ausstrahlung geplanten Programms oder eine Programmstoppperiode bezeichnet, in einem Bereich, wo kein Programmrahmen existiert, in jedem Programmanzeigeabschnitt aufweist,
die Vorrichtung zusätzlich aufweist:
eine Bedienvorrichtung (105), die durch einen Benutzer bedienbar ist, um den auf dem Bildschirm angezeigten Teilbereich der Programmtabelle in einer Zeitachsen- und/oder Datumsachsenrichtung zu scrollen, und um einen Programmrahmen oder einen Leerrahmen der Programmtabelle auszuwählen,
die Steuereinheit (106) angepasst ist, wenn eine Auswahl eines Programmrahmens auf Grundlage einer Bedienung der Bedienvorrichtung entlang der Zeitachse von Programmrahmen zu Programmrahmen bewegt wird, den Programmtabellengenerator zu steuern, sodass der auf dem Bildschirm angezeigte Teilbereich der Programmtabelle in der Zeitachsenrichtung gescrollt wird, und sodass, wenn der auf dem Bildschirm angezeigte Teilbereich der Programmtabelle nur in der Zeitachsenrichtung über Daten hinweg gescrollt wird, Programmrahmen an Enden von einzelnen Daten und Programmrahmen an Anfängen von nächsten Daten in den Programmanzeigeabschnitten der einzelnen Daten fortlaufend angezeigt werden, und
die Steuereinheit (106) angepasst ist, wenn ein letzter Programmrahmen in einem Programmanzeigeabschnitt eines letzten Datums, wo Programmplanungsinformationen existieren, der zumindest einen Programmrahmen umfasst, ausgewählt ist und der Benutzer die Bedienvorrichtung zum Auswählen eines folgenden Lehrrahmens bedient, den Programmtabellengenerator zu steuern, sodass ein Programmrahmen oder ein Leerrahmen eines Programmanzeigeabschnitts eines unmittelbar vorhergehenden Datums ausgewählt wird, der zu einer Zeit nach dem letzten Programmrahmen beginnt.

2. Anzeigevorrichtung gemäß Anspruch 1,
wobei die Steuereinheit (106) angepasst ist, den Programmtabellengenerator zu steuern, sodass ein auf der Grundlage einer Bedienung der Bedienvorrichtung ausgewählter Programmrahmen in einer ersten Anzeigeart als ein erster Programmrahmen angezeigt wird, und sodass, wenn es einen weiteren Programmrahmen mit einer vorbestimmten Beziehung zu dem ersten Programmrahmen gibt, dieser weitere Programmrahmen mit der vorbestimmten Beziehung zu dem ersten Programmrahmen in einer zweiten Anzeigeart als ein zweiter Programmrahmen angezeigt wird, und
wobei die erste und die zweite Anzeigeart so eingestellt sind, dass sie von einer Anzeigeart eines anderen Bereichs als dem ersten und dem zweiten Programmrahmen verschieden sind.

3. Anzeigevorrichtung gemäß Anspruch 2, wobei die vorbestimmte Beziehung darin besteht, dass das Programm des zweiten Programmrahmens ein Serienprogramm mit einem gemeinsamen Titel mit dem Programm des ersten Programmrahmens ist.

4. Anzeigevorrichtung gemäß Anspruch 2, wobei die vorbestimmte Beziehung darin besteht, dass das Programm des zweiten Programmrahmens in einem gemeinsamen Genre mit dem Programm des ersten Programmrahmens umfasst ist.

5. Anzeigevorrichtung gemäß Anspruch 1,
wobei, wenn ein letzter ausgewählter Rahmen eines Programmanzeigeabschnitt eines letzten Datums, der zumindest einen Programmrahmen oder einen Leerrahmen umfasst, ausgewählt wird, die Steuereinheit (106) angepasst ist, den Programmtabellengenerator zu steuern, den auf dem Bildschirm angezeigten Teilbereich der Programmtabelle in der Datumsachsenrichtung zu scrollen, sodass ein Bereich eines Programmanzeigeabschnitts, der keinen Programmrahmen und keinen Leerrahmen aufweist, nicht auf dem Bildschirm angezeigt wird.

6. Anzeigeverfahren zum Anzeigen einer Programmtabelle in einer Anzeige, mit den Schritten:
Empfangen eines Rundfunksignals und Extrahieren von Programmplanungsinformationen aus dem empfangenen Rundfunksignal;
Erzeugen einer Programmtabelle auf Grundlage der extrahierten Programmplanungsinformationen, die Programmtabelle (200) umfassend eine Zeitachse (203), die eine geplante Ausstrahlungszeit von Programmen bezeichnet, eine Datumsachse (204), die Zeitachse kreuzend bereitgestellt, die geplante Ausstrahlungstage von den Programmen bezeichnet, und eine Vielzahl von Programmanzeigeabschnitten (205), sich entlang der Zeitachse für einzelne Daten entlang der Datumsachse erstreckend bereitgestellt, wobei die Programmtabelle zumindest einen Programmrahmen aufweist, der in einem der Vielzahl von Programanzeigeabschnitten angezeigt wird und Informationen über ein Programm zeigt; und
Anzeigen zumindest eines Teilbereichs der erzeugten Programmtabelle auf einem Bildschirm,
**dadurch gekennzeichnet, dass**
die Programmtabelle einen Leerrahmen, der eine Periode einer Unbestimmtheit eines zur Ausstrahlung geplanten Programms oder eine Programmstoppperiode bezeichnet, in einem Bereich, wo kein Programmrahmen existiert, in jedem Programmanzeigeabschnitt aufweist, und
das Anzeigeverfahren zusätzlich aufweist:
Scrollen des auf dem Bildschirm angezeigten Teilbereichs der Programmtabelle in einer Zeitachsen- und/oder Datumsachsenrichtung und Auswählen eines Programmrahmens oder eines Leerrahmens der Programmtabelle durch eine Bedienung einer Bedienvorrichtung durch einen Benutzer,
der Schritt des Erzeugens der Programmtabelle, wenn eine Auswahl eines Programmrahmens entlang der Zeitachse von Programmrahmen zu Programmrahmen bewegt wird, einen Schritt des Scrollens (S127, S144) des auf dem Bildschirm angezeigten Teilbereichs der Programmtabelle in der Zeitachsenrichtung, und, wenn der auf dem Bildschirm angezeigte Teilbereich der Programmtabelle nur in der Zeitachsenrichtung über Daten hinweg gescrollt wird, ein fortlaufendes Anzeigen von Programmrahmen an Enden von einzelnen Daten und Programmrahmen an Anfängen von nächsten Daten in den Programmanzeigeabschnitten der einzelnen Daten aufweist, und
der Schritt des Erzeugens der Programmtabelle, wenn ein letzter Programmrahmen in einem Programmanzeigeabschnitt eines letzten Datums, wo Programmplanungsinformationen existieren, der zumindest einen Programmrahmen umfasst, ausgewählt ist und der Benutzer die Bedienvorrichtung zum Auswählen eines folgenden Leerrahmens bedient, ein Auswählen eines Programmrahmens oder eines Leerrahmens eines Programmanzeigeabschnitts eines unmittelbar vorhergehenden Datums aufweist, der zu einer Zeit nach dem letzten Programmrahmen beginnt.

7. Anzeigeprogramm, das durch eine Verarbeitungsvorrichtung ausführbar ist, um eine Programmtabelle in einer Anzeige anzuzeigen, wobei dieses die Verarbeitungsvorrichtung, wenn es durch diese ausgeführt wird, veranlasst zum Durchführen von:
Empfangen eines Rundfunksignals und Extrahieren von Programmplanungsinformationen aus dem empfangenen Rundfunksignal;
Erzeugen einer Programmtabelle auf Grundlage der extrahierten Programmplanungsinformationen, die Programmtabelle (200) umfassend eine Zeitachse (203), die eine geplante Ausstrahlungszeit von Programmen bezeichnet, eine Datumsachse (204), die Zeitachse kreuzend bereitgestellt, die geplante Ausstrahlungstage von den Programmen bezeichnet, und eine Vielzahl von Programmanzeigeabschnitten (205), sich entlang der Zeitachse für einzelne Daten entlang der Datumsachse erstreckend bereitgestellt, wobei die Programmtabelle zumindest einen Programmrahmen aufweist, der in einem der Vielzahl von Programanzeigeabschnitten angezeigt wird und Informationen über ein Programm zeigt; und
Anzeigen zumindest eines Teilbereichs der erzeugten Programmtabelle auf einem Bildschirm,
**dadurch gekennzeichnet, dass**
die Programmtabelle einen Leerrahmen, der eine Periode einer Unbestimmtheit eines zur Ausstrahlung geplanten Programms oder eine Programmstoppperiode bezeichnet, in einem Bereich, wo kein Programmrahmen existiert, in jedem Programmanzeigeabschnitt aufweist, und
das Anzeigeprogramm die Verarbeitungsvorrichtung, wenn es durch diese ausgeführt wird, zusätzlich veranlasst zum Durchführen von: Scrollen des auf dem Bildschirm angezeigten Teilbereichs der Programmtabelle in einer Zeitachsen- und/oder Datumsachsenrichtung und Auswählen eines Programmrahmens oder eines Leerrahmens der Programmtabelle durch eine Bedienung einer Bedienvorrichtung durch einen Benutzer,
der Prozess des Erzeugens der Programmtabelle, wenn eine Auswahl eines Programmrahmens entlang der Zeitachse von Programmrahmen zu Programmrahmen bewegt wird, einen Prozess des Scrollens (S127, S144) des auf dem Bildschirm angezeigten Teilbereichs der Programmtabelle in der Zeitachsenrichtung, und, wenn der auf dem Bildschirm angezeigte Teilbereich der Programmtabelle nur in der Zeitachsenrichtung über Daten hinweg gescrollt wird, einen Prozess des fortlaufenden Anzeigens von Programmrahmen an Enden von einzelnen Daten und Programmrahmen an Anfängen von nächsten Daten in den Programmanzeigeabschnitten der einzelnen Daten aufweist, und
der Prozess des Erzeugens der Programmtabelle, wenn ein letzter Programmrahmen in einem Programmanzeigeabschnitt eines letzten Datums, wo Programmplanungsinformationen existieren, der zumindest einen Programmrahmen umfasst, ausgewählt ist und der Benutzer die Bedienvorrichtung zum Auswählen eines folgenden Leerrahmens bedient, ein Auswählen eines Programmrahmens oder eines Leerrahmens eines Programmanzeigeabschnitts eines unmittelbar vorhergehenden Datums aufweist, der zu einer Zeit nach dem letzten Programmrahmen beginnt.

## Revendications

1. Appareil d'affichage (100) comprenant :
un récepteur (102) qui est adapté pour recevoir un signal de diffusion et pour extraire des informations de programmation de programme du signal de diffusion reçu ;
un générateur de table de programmes (104, 105, 107, 108) qui est adapté pour générer une table de programmes sur la base des informations de programmation de programme extraites par ledit récepteur, ladite table de programmes (200) incluant un axe de temps (203) indiquant un horaire de diffusion de programmes, un axe de date (204), pourvu pour croiser ledit axe de temps, indiquant des jours de diffusion des programmes, et une pluralité de sections d'affichage de programme (205) pourvue pour s'étendre le long dudit axe de temps pour des dates individuelles le long dudit axe de date, ladite table de programmes ayant au moins une trame de programme affichée dans l'une quelconque de la pluralité de sections d'affichage de programme et montrant des informations sur un programme ;
un afficheur (109) qui est adapté pour afficher sur un écran (TJ) au moins une zone partielle de la table de programmes générée par ledit générateur de table de programmes ; et
un dispositif de commande (106) qui est adapté pour commander ledit générateur de table de programmes de sorte qu'au moins la zone partielle de la table de programmes générée par ledit générateur de table de programmes soit affichée sur ledit écran,
**caractérisé en ce que**
ladite table de programmes a une trame vide indiquant une période indéterminée de programme à diffusion programmée ou une période d'arrêt de programme dans une zone où aucune trame de programme n'existe dans chaque section d'affichage de programme,
l'appareil comprend en outre :
un dispositif d'opération (105) qui est actionnable par un utilisateur pour faire défiler la zone partielle de la table de programmes affichée sur ledit écran dans une direction d'axe de temps et/ou d'axe de date, et pour sélectionner une trame de programme ou une trame vide de la table de programmes,
ledit dispositif de commande (106) est adapté, lorsqu'une sélection d'une trame de programme est déplacée d'une trame de programme à une autre le long dudit axe de temps sur la base d'une opération dudit dispositif d'opération, pour commander ledit générateur de table de programmes de sorte que la zone partielle de la table de programmes affichée sur l'écran soit faite défiler dans ladite direction d'axe de temps, et de sorte que, lorsque la zone partielle de la table de programmes affichée sur l'écran est faite défiler uniquement dans la direction d'axe de temps à travers des dates, des trames de programme à des fins de dates individuelles et des trames de programme à des débuts de dates prochaines soient affichées de façon continue dans les sections d'affichage de programme des dates individuelles, et
ledit dispositif de commande (106) est adapté, lorsqu'une dernière trame de programme dans une section d'affichage de programme d'une dernière date, où des informations de programmation de programme existent, incluant au moins une trame de programme est sélectionnée et que l'utilisateur actionne ledit dispositif d'opération pour sélectionner une trame vide suivante, pour commander ledit générateur de table de programmes de sorte qu'une trame de programme ou une trame vide d'une section d'affichage de programme d'une date immédiatement précédente qui commence à un temps après ladite dernière trame de programme soit sélectionnée.

2. Appareil d'affichage selon la revendication 1,
dans lequel ledit dispositif de commande (106) est adapté pour commander ledit générateur de table de programmes de sorte qu'une trame de programme sélectionnée sur la base d'une opération dudit dispositif d'opération soit affichée d'une première manière d'affichage comme une première trame de programme, et de sorte que, lorsqu'il y a une autre trame de programme ayant une relation prédéterminée avec ladite première trame de programme, cette une autre trame de programme ayant la relation prédéterminée avec ladite première trame de programme soit affichée d'une seconde manière d'affichage comme une seconde trame de programme, et
dans lequel lesdites première et seconde manières d'affichage sont établies pour être différentes d'une manière d'affichage d'une zone autre que lesdites première et seconde trames de programme.

3. Appareil d'affichage selon la revendication 2, dans lequel ladite relation prédéterminée est que le programme de ladite seconde trame de programme est un programme série ayant un titre commun avec le programme de ladite première trame de programme.

4. Appareil d'affichage selon la revendication 2, dans lequel ladite relation prédéterminée est que le programme de ladite seconde trame de programme est inclus dans un genre commun avec le programme de ladite première trame de programme.

5. Appareil d'affichage selon la revendication 1,
dans lequel, lorsqu'une dernière trame sélectionnée d'une section d'affichage de programme d'une dernière date incluant au moins une trame de programme ou une trame vide est sélectionnée, ledit dispositif de commande (106) est adapté pour commander ledit générateur de table de programmes pour faire défiler la zone partielle de la table de programmes affichée sur ledit écran dans ladite direction d'axe de temps de sorte qu'une zone d'une section d'affichage de programme n'ayant aucune trame de programme et aucune trame vide ne soit pas affichée sur l'écran.

6. Procédé d'affichage permettant d'afficher une table de programmes dans un afficheur, comprenant les étapes consistant à :
recevoir un signal de diffusion et extraire des informations de programmation de programme du signal de diffusion reçu ;
générer une table de programmes sur la base des informations de programmation de programme extraites, ladite table de programmes (200) incluant un axe de temps (203) indiquant un horaire de diffusion de programmes, un axe de date (204), pourvu pour croiser ledit axe de temps, indiquant des jours de diffusion des programmes, et une pluralité de sections d'affichage de programme (205) pourvue pour s'étendre le long dudit axe de temps pour des dates individuelles le long dudit axe de date, ladite table de programmes ayant au moins une trame de programme affichée dans l'une quelconque de la pluralité de sections d'affichage de programme et montrant des informations sur un programme ; et
afficher sur un écran au moins une zone partielle de la table de programmes générée,
**caractérisé en ce que**
ladite table de programmes a une trame vide indiquant une période indéterminée de programme à diffusion programmée ou une période d'arrêt de programme dans une zone où aucune trame de programme n'existe dans chaque section d'affichage de programme, et
le procédé d'affichage comprend en outre :
le défilement de la zone partielle de la table de programmes affichée sur ledit écran dans une direction d'axe de temps et/ou d'axe de date et la sélection d'une trame de programme ou d'une trame vide de la table de programmes par l'intermédiaire d'une opération d'un dispositif d'opération par un utilisateur,
ladite étape de génération de ladite table de programmes comprend, lorsqu'une sélection d'une trame de programme est déplacée d'une trame de programme à une autre le long dudit axe de temps, une étape consistant à faire défiler (S127, S144) la zone partielle de la table de programmes affichée sur l'écran dans ladite direction d'axe de temps, et, lorsque la zone partielle de la table de programmes affichée sur l'écran est faite défiler uniquement dans la direction d'axe de temps à travers des dates, afficher des trames de programme à des fins de dates individuelles et des trames de programme à des débuts de dates prochaines de façon continue dans les sections d'affichage de programme des dates individuelles, et
ladite étape de génération de ladite table de programmes comprend, lorsqu'une dernière trame de programme dans une section d'affichage de programme d'une dernière date, où des informations de programmation de programme existent, incluant au moins une trame de programme est sélectionnée et que l'utilisateur actionne ledit dispositif d'opération pour sélectionner une trame vide suivante, la sélection d'une trame de programme ou d'une trame vide d'une section d'affichage de programme d'une date immédiatement précédente qui commence à un temps après ladite dernière trame de programme.

7. Programme d'affichage qui est exécutable par un dispositif de traitement pour afficher une table de programmes dans un afficheur, amenant ledit dispositif de traitement, lorsqu'il est exécuté par celui-ci, à effectuer :
la réception d'un signal de diffusion et l'extraction d'informations de programmation de programme du signal de diffusion reçu ;
la génération d'une table de programmes sur la base des informations de programmation de programme extraites, ladite table de programmes (200) incluant un axe de temps (203) indiquant un horaire de diffusion de programmes, un axe de date (204), pourvu pour croiser ledit axe de temps, indiquant des jours de diffusion des programmes, et une pluralité de sections d'affichage de programme (205) pourvue pour s'étendre le long dudit axe de temps pour des dates individuelles le long dudit axe de date, ladite table de programmes ayant au moins une trame de programme affichée dans l'une quelconque de ladite pluralité de sections d'affichage de programme et montrant des informations sur un programme ; et
l'affichage sur un écran d'au moins une zone partielle de la table de programmes générée,
**caractérisé en ce que**
ladite table de programmes a une trame vide indiquant une période indéterminée de programme à diffusion programmée ou une période d'arrêt de programme dans une zone où aucune trame de programme n'existe dans chaque section d'affichage de programme, et
le programme d'affichage amène en outre ledit dispositif de traitement, lorsqu'il est exécuté par celui-ci, à effectuer : le défilement de la zone partielle de la table de programmes affichée sur ledit écran dans une direction d'axe de temps et/ou d'axe de date et la sélection d'une trame de programme ou d'une trame vide de la table de programmes par l'intermédiaire d'une opération d'un dispositif d'opération par un utilisateur,
ledit processus de génération de ladite table de programmes comprend, lorsqu'une sélection d'une trame de programme est déplacée d'une trame de programme à une autre le long dudit axe de temps, un processus consistant à faire défiler (S127, S144) la zone partielle de la table de programmes affichée sur l'écran dans ladite direction d'axe de temps, et, lorsque la zone partielle de la table de programmes affichée sur l'écran est faite défiler uniquement dans la direction d'axe de temps à travers des dates, un processus consistant à afficher des trames de programme à des fins de dates individuelles et des trames de programme à des débuts de dates prochaines de façon continue dans les sections d'affichage de programme des dates individuelles, et
ledit processus de génération de ladite table de programmes comprend, lorsqu'une dernière trame de programme dans une section d'affichage de programme d'une dernière date, où des informations de programmation de programme existent, incluant au moins une trame de programme est sélectionnée et que l'utilisateur actionne ledit dispositif d'opération pour sélectionner une trame vide suivante, la sélection d'une trame de programme ou d'une trame vide d'une section d'affichage de programme d'une date immédiatement précédente qui commence à un temps après ladite dernière trame de programme.
